# EUROPÄISCHE PATENTSCHRIFT

(11) **EP 3 206 875 B1**
(45) Veröffentlichungstag und Bekanntmachung des Hinweises auf die Patenterteilung: **07.10.2020**
(21) Anmeldenummer: 15778348.1
(22) Anmeldetag: 14.10.2015
(51) Int. Cl.: B41C 1/00, B41C 1/04, B41C 1/05, B41C 1/02, B33Y 10/00, B33Y 50/02, B29C 64/153, B29C 64/386, B33Y 30/00

(54) **VERFAHREN ZUR ERZEUGUNG EINER DRUCKBILDSTRUKTUR**
METHOD FOR PRODUCING AN IMAGE STRUCTURE
PROCÉDÉ DE PRODUCTION D'UNE STRUCTURE D'IMAGE IMPRIMÉE

(30) Priorität: 16.10.2014 LU 92574
(43) Veröffentlichungstag der Anmeldung: 23.08.2017
(73) Patentinhaber: Windmöller & Hölscher KG, 49525 Lengerich (DE)
(72) Erfinder: KRÜMPELMANN, Martin, 49525 Lengerich (DE); GUNSCHERA, Frank, 49078 Osnabrück (DE); WEIDMANN, Björn, 49078 Osnabrück (DE)
(74) Vertreter: Vogel, Andreas
(86) Internationale Anmeldenummer: PCT/EP2015/073765
(87) Internationale Veröffentlichungsnummer: WO 2016/059106

(56) Entgegenhaltungen:
- EP-A1- 2 153 991
- EP-A1- 2 371 541
- EP-A1- 2 420 382
- EP-A1- 2 746 058

## Beschreibung

Die Erfindung betrifft ein Verfahren zur Erzeugung einer Druckbildstruktur gemäß der im Oberbegriff des Anspruchs 1 näher definierten Art. Ferner bezieht sich die Erfindung auf einen Druckformautomaten gemäß dem Anspruch 16.

Es sind in der Druckindustrie unterschiedliche Verfahren zum Bedrucken bekannt, um Motive als Druckbild auf einen Bedruckstoff, wie z. B. Papier oder Folie zu übertragen. Dabei stellen Tiefdruck- und Hochdruckverfahren eine Möglichkeit zum Bedrucken dar, wobei bei einem Hochdruckverfahren, wie dem Flexodruck, die erhabenen Stellen einer Druckform bildtragend sind. Als Druckformen kommen beispielsweise Klischees oder Druckplatten zum Einsatz, welche das Druckbild aufweisen und mittels einer Druckbildstruktur das Druckbild übertragen können. Dazu werden die Klischees bzw. Druckplatten üblicherweise auf Grundkörpern wie Hülsen (bzw. Sleeves) verklebt. Die Druckformen weisen z. B. eine Trägerfolie bzw. -schicht auf, auf welcher eine Druckbildschicht z. B. aus Fotopolymer aufgebracht ist. Die Druckbildstruktur kann dabei beispielsweise durch die Einbringung eines Druckreliefs, z. B. durch Belichtung auf dem Fotopolymer bzw. auf der Druckbildschicht erzeugt werden (das Druckrelief bildet damit die Druckbildstruktur). Die entstandenen Druckformen (bestehend aus Trägerschicht und Druckbildstruktur) werden anschließend, insbesondere mit Klebebändern, auf der Hülse bzw. auf den Grundkörper verklebt.

Es hat sich dabei als nachteilhaft ergeben, dass für bekannte Verfahren zur Erzeugung der Druckbildstruktur eine aufwendige Herstellung und Anbringung der Druckformen an dem Grundkörper notwendig ist. Eine flexible Anpassung oder Änderung des Druckbildes bzw. der Druckform wird im Druckprozess dadurch erschwert, dass zunächst eine neue Druckbildstruktur insbesondere separat von dem Grundkörper mit hohem Aufwand hergestellt werden muss, welche anschließend an die Hülse bzw. dem Grundkörper angebracht wird. Die zur Erzeugung der Druckbildstruktur eingesetzten Verfahren sind dabei zeit- und kostenaufwendig, gehen oft mit einem hohen Materialverbrauch einher, und erfordern zudem ggf. eine Vielzahl von Arbeitsprozessen, welche mit unterschiedlichen Vorrichtung durchgeführt werden müssen, wodurch bekannte Verfahren oft nicht flexibel und schnell einsetzbar sind.

Das Dokument EP 2 153 991 A1 offenbart alle Merkmale der Oberbegriff von Anspruch 1 (oder von Anspruch 16).

Es ist daher eine Aufgabe der vorliegenden Erfindung, die voranstehend beschriebenen Nachteile zumindest teilweise zu beheben. Insbesondere sollen Verfahren zur Erzeugung einer Druckbildstruktur sowie ein Druckformautomat vorgeschlagen werden, welche sich für einen schnelleren, günstigeren und flexibleren Einsatz im Druckprozess zur Erzeugung der Druckbildstruktur eignen.

Die voranstehende Aufgabe wird gelöst durch ein Verfahren zur Erzeugung einer Druckbildstruktur mit den Merkmalen des Anspruchs 1 sowie einen Druckformautomaten zur Erzeugung einer Druckbildstruktur mit den Merkmalen des Anspruchs 16. Weitere Merkmale und Details der Erfindung ergeben sich aus den jeweiligen Unteransprüchen, der Beschreibung und den Zeichnungen. Dabei gelten Merkmale und Details, die im Zusammenhang mit den erfindungsgemäßen Verfahren beschrieben sind, selbstverständlich auch im Zusammenhang mit dem erfindungsgemäßen Druckformautomaten und jeweils umgekehrt, so dass bezüglich der Offenbarung zu den einzelnen Erfindungsaspekten stets wechselseitig Bezug genommen wird bzw. werden kann. Das erfindungsgemäße Verfahren dient der Erzeugung einer Druckbildstruktur gemäß einer Druckbildvorgabe, insbesondere für ein Hochdruckverfahren und/oder ein Tiefdruckverfahren, und insbesondere für den Flexodruck. Erfindungsgemäß werden dabei die nachfolgenden Schritte durchgeführt:
a) Bereitstellen eines Grundkörpers für die Aufnahme der Druckbildstruktur,
b) Erzeugen einer Druckbildstruktur auf dem Grundkörper, sodass eine Druckbildschicht mit der Druckbildstruktur auf dem Grundkörper gebildet wird
dadurch gekennzeichnet,
dass die Ansteuerung einer Bearbeitungsvorrichtung und/oder die Auswahl eines Materials zur Erzeugung einer Druckbildstruktur an digitale Parameter angepasst wird, wobei die Daten von dem Grundkörper und/oder dem Druckformautomaten an eine Druckmaschine übertragen werden.

Der erfinddungsgemässe Druckformautomat ist gemäß dem unabhängigen Anspruch 16 definiert. Somit ist ein schnelles und flexibles Erzeugen bzw. Aufbringen der Druckbildstruktur insbesondere direkt und unmittelbar auf den Grundkörper möglich, so dass auf eine aufwendige separate Herstellung und Aufbringung der Druckform auf den Grundkörper verzichtet werden kann. Vorzugsweise erfolgt die Erzeugung der Druckbildstruktur somit derart, dass die Druckform gleichzeitig mit der Aufbringung der Druckbildstruktur auf den Grundkörper entsteht (statt wie üblich zunächst separat hergestellt und erst dann aufgebracht zu werden). Die Druckbildschicht ist dabei insbesondere eine Schicht aus einem (z. B. von einem erfindungsgemäßen Druckformautomaten auf dem Grundkörper aufgetragenen) Material, welche nach der Erzeugung der Druckbildstruktur z. B. derart (mit einem Relief) strukturiert ist, dass das Druckbild gemäß der Druckbildvorgabe auf einen Bedruckstoff übertragen werden kann. Es wird dabei in einer Druckmaschine z. B. Farbe derart auf den Bedruckstoff durch die Druckbildstruktur übertragen, dass ein Abbild der Druckbildvorgabe bzw. des Druckbildes auf dem Bedruckstoff entsteht. Vorzugsweise wird die Druckbildschicht erst dadurch gebildet, dass die Druckbildstruktur entsteht (z. B. durch das Auftragen des Materials an bestimmten Stellen des Grundkörpers). Alternativ kann die Druckbildschicht auch ohne Druckbildstruktur vorhanden sein bzw. zunächst gleichmäßig aufgetragen werden, wobei die Druckbildstruktur dann erst in einem zweiten Schritt aus der Druckbildschicht (bzw. dem Material) gebildet wird. Die Druckbildschicht weist damit insbesondere die Druckbildstruktur auf. Der Grundkörper kann beispielsweise eine Hülse, insbesondere einen Sleeve, eine Trägerschicht und/oder eine Unterlage für ein additives Fertigungsverfahren aufweisen.

Die Druckbildschicht und/oder die Druckbildstruktur kann insbesondere teilflächig, vollflächig und/oder schichtweise auf dem Grundkörper ausgebildet bzw. aufgetragen werden. Der Ausdruck "schichtweise" bezieht sich dabei darauf, dass die Druckbildschicht und/oder die Druckbildstruktur schichtweise aufgetragen werden und/oder mehrere Schichten umfassen. Es wird hierdurch der Vorteil erzielt, dass auf eine teure separate Herstellung der Druckbildstruktur z. B. als Druckplatte und eine anschließende aufwendige Montage verzichtet werden kann, da die Druckbildstruktur direkt auf dem Grundkörper aufgebracht wird.

Der Grundkörper ist dabei vorzugsweise zylindrisch ausgebildet, so dass er sich zum Aufschieben auf einen Dorn (z. B. einer Druckmaschine oder einer Aufnahme eines erfindungsgemäßen Druckformautomaten) und insbesondere zur Ausbildung eines Druckformzylinders eignet. Dabei kann der Grundkörper eine Hülse, insbesondere einen Sleeve aufweisen, welche z. B. aus glasfaserverstärkten Kunststoff oder kohlenfaserverstärkten Kunststoff ausgebildet ist. Hierdurch weist die Hülse besondere Vorteile auf, wie eine hohe Widerstandsfähigkeit und Festigkeit. Weiter ist es denkbar, dass die Hülse aus Epoxidharzen, aus Polyesterharzen (z. B. mit Glasfasergewebe verstärkt), aus einem elastomeren Werkstoff oder sonstigen Polymeren ausgebildet ist. So können die elastischen Eigenschaften der Hülse für den Einsatz in einer bestimmten Druckmaschine und vorgegebenen Parametern angepasst werden. Weiter kann die Hülse ggf. mit elastomeren Werkstoffen, wie Gummi oder Polyurethan beschichtet sein. Die Wandstärke der Hülse kann dabei z. B. 0,15 mm bis 3 mm und insbesondere 0,5 mm bis 2 mm betragen. Da die Hülse im Rahmen des Druckprozesses ggf. auf einen Dorn aufgebracht werden muss, wobei die Hülse zum Aufschieben und Abziehen z. B. mit Druckluft beaufschlagt wird, kann sie für eine Aufweitung durch Druckluft geeignet sein und eine hinreichende Flexibilität aufweisen. Beispielsweise kann die Hülse geeignet sein, mit einem Luftdruck von z. B. 6 bar bis 12 bar aufgeweitet zu werden. Zum Aufschieben ist es weiter vorteilhaft, wenn die Hülse eine flexible Schicht an ihrer Innenfläche aufweist. Hierdurch wird eine einfache Montage an dem Dorn ermöglicht.

Ebenfalls Gegenstand der Erfindung ist ein Verfahren zur Erzeugung einer Druckbildstruktur gemäß einer Druckbildvorgabe, insbesondere für ein Hochdruckverfahren und/oder Tiefdruckverfahren, und insbesondere für einen Flexodruck. Dabei ist vorgesehen, dass die Druckbildstruktur durch einen erfindungsgemäßen Druckformautomaten, insbesondere einen 3D-Drucker, additiv erzeugt wird. Der Ausdruck additiv bezeichnet dabei insbesondere, dass die Druckbildstruktur bzw. das Material der Druckbildstruktur additiv, insbesondere auf einen Grundkörper, aufgetragen wird, insbesondere durch ein additives Fertigungsverfahren. Die Druckbildstruktur wird also vorzugsweise dadurch additiv erzeugt, dass Material bzw. Materialschichten vollflächig, teilflächig und/oder schichtweise aufgetragen werden und so die Druckbildstruktur durch die dadurch entstehenden erhabenen Stellen (das Relief) gebildet wird. Die Erzeugung der Druckbildstruktur erfolgt dabei beispielsweise durch einen erfindungsgemäßen Druckformautomaten, insbesondere einen 3D-Drucker, welcher beispielsweise geeignet ist, ein additives Fertigungsverfahren durchzuführen.

Vorteilhaft ist es darüber hinaus, wenn die Druckbildstruktur auf einem Grundkörper, insbesondere auf einer Trägerschicht des Grundkörpers erzeugt wird. Damit entfällt der separate Arbeitsschritt des Aufklebens der Druckbildstruktur auf den Grundkörper, wie beispielsweise einer Hülse oder eines Sleeves, und die Druckbildstruktur kann somit schnell für den Einsatz in einer Druckmaschine genutzt werden. Die Druckbildstruktur kann alternativ z. B auch auf einer Trägerschicht ohne den Grundkörper erzeugt werden und auf diese Weise eine separate Druckform (bestehend aus Trägerschicht und Druckbildstruktur) gebildet werden. Diese Druckform kann anschließend auf den Grundkörper z. B. durch Verkleben aufgebracht werden. Ebenfalls ist es denkbar, dass die Druckbildstruktur direkt auf den Grundkörper bzw. der Trägerschicht mit dem Grundkörper erzeugt wird und insbesondere schichtweise erzeugt wird, d. h. sukzessive aus mehreren Schichten ausgebildet wird.

In einer weiteren Möglichkeit kann im Rahmen der Erfindung vorgesehen sein, dass die Druckbildstruktur insbesondere auf einer Trägerschicht derart erzeugt wird, dass die Druckbildstruktur als eine separate Druckbildschicht ausgebildet und auf einen Grundkörper aufbringbar ist. Die Aufbringung auf den Grundkörper kann dabei z. B. manuell durch einen Bediener oder automatisiert durch den erfindungsgemäßen Druckformautomaten erfolgen. Somit ist die Druckbildstruktur auch ohne den Grundkörper erzeugbar, transportierbar und verarbeitbar, wodurch beispielsweise eine höhere Flexibilität und eine einfachere Verarbeitung ermöglicht werden kann. Die erzeugte Druckbildschicht mit der Druckbildstruktur kann dann beispielsweise auf den Grundkörper durch eine Verwendung von Klebemasse und/oder eines doppelseitigen Klebebandes aufgeklebt werden. Ebenfalls ist die Nutzung von Magnetismus denkbar, um die Druckbildschicht mit der Druckbildstruktur an dem Grundkörper zu befestigen. Dabei bildet die Druckbildschicht insbesondere ein manuell auf den Grundkörper montierbares Klischee bzw. eine Druckplatte.

Es ist ferner denkbar, dass eine elastische Schicht und/oder eine Trägerschicht durch den erfindungsgemäßen Druckformautomaten erzeugt werden, und die elastische Schicht und/oder die Trägerschicht mit der Druckbildschicht auf einen Grundkörper aufgebracht werden. Dabei können die elastische Schicht und/oder die Trägerschicht ggf. ebenfalls additiv oder gemäß einem nachfolgend beschriebenen Fertigungsverfahren durch einen erfindungsgemäßen Druckformautomaten erzeugt werden. Anschließend kann ggf. die Druckschicht, insbesondere mit der Druckbildstruktur, auf die Trägerschicht angebracht werden. Die Druckschicht weist insbesondere eine geringere Festigkeit als die Trägerschicht auf, um somit einen optimalen Anpressdruck bei einem Druckprozess gewährleisten zu können.

Die im Folgenden beschriebenen Merkmale und Details sowie die abhängigen Ansprüche haben vorteilhafte Weiterbildungen der Erfindung, insbesondere der erfindungsgemäßen Verfahren sowie des erfindungsgemäßen Druckformautomaten, zum Gegenstand.

Vorzugsweise dient der Grundkörper dabei der Aufnahme (d. h. insbesondere zum Halten bzw. Haften) der Druckbildstruktur, insbesondere für den Flexodruck. Der Grundkörper weist insbesondere eine Hülse, insbesondere einen Sleeve auf, welcher sich vorzugsweise zum Aufschieben auf einen Dorn eignet. Auf der Hülse ist beispielsweise eine elastische Schicht aufgebracht, welche insbesondere zum Halten einer äußeren Trägerschicht dient. Vorzugsweise weist der Grundkörper die äußere Trägerschicht auf, wobei die Trägerschicht derart ausgebildet ist, dass die Druckbildstruktur aufbringbar bzw. durch die Trägerschicht haltbar ist und insbesondere durch Aufbringung der Druckbildstruktur auf der Trägerschicht eine Druckform ausbildbar ist. Hierdurch wird somit der Vorteil erzielt, dass der Grundkörper bereits die Trägerschicht zur Aufnahme der Druckbildstruktur, insbesondere einer Druckbildschicht mit der Druckbildstruktur, aufweist. Hierdurch ist es insbesondere möglich, auf eine separate Herstellung einer Druckform (oder eines Klischees), welche die Trägerschicht sowie die Druckbildstruktur aufweist, zu verzichten. Im Druckprozess kann sich daher die Druckform z. B. dadurch unmittelbar an bzw. auf dem Grundkörper ausbilden, dass lediglich die Druckbildstruktur aufgebracht wird. Dies wird dadurch erreicht, dass die Trägerschicht bereits am Grundkörper vorgesehen ist und so zusammen mit der aufzubringenden Druckbildstruktur (z. B. als Druckbildschicht) die Druckform bildet. Die Erzeugung der Druckbildstruktur und die Anbringung an den Grundkörper können also ggf. aufgrund der Ausbildung des Grundkörpers als ein einziger Arbeitsschritt erfolgen. Dies bringt erhebliche Vorteile mit sich, insbesondere im Vergleich mit einer separaten Herstellung einer Druckform mit anschließender Aufklebung auf den Grundkörper, da das Druckbild bzw. die Druckbildstruktur flexibel, schnell und individuell direkt auf der Trägerschicht des Grundkörpers aufgebracht und angepasst werden kann. Der Grundkörper kann zudem anschließend sofort für den weiteren Druckprozess verwendet werden.

Es ist ferner denkbar, dass gemäß Schritt b) zunächst ein Material auf den Grundkörper, insbesondere als Schicht, aufgetragen und anschließend derart bearbeitet wird, dass die Druckbildstruktur entsteht, insbesondere durch ein 3D-Druckverfahren und/oder durch Gravur. Somit kann flexibel und schnell eine Druckbildstruktur auf dem Grundkörper erzeugt werden, welche einer Druckbildvorgabe entspricht und sofort für den weiteren Druckprozess einsetzbar ist. Als Material kann beispielsweise ein Polymer zum Einsatz kommen, welches als Schicht und/oder schichtweise aufgetragen wird. Weiter können auch sonstige Materialarten als Material zur Erzeugung der Druckbildstruktur Verwendung finden, welche im Folgenden noch näher beschrieben werden. Die Druckbildschicht mit der Druckbildstruktur entsteht hierbei insbesondere dadurch, dass durch ein Fertigungsverfahren das Material, insbesondere die Polymerschicht, verändert wird. Die Auftragung des Materials bzw. der Materialschicht kann dabei teilflächig, vollflächig und/oder schichtweise auf dem Grundkörper erfolgen. Im Gegensatz zu einer teilflächigen Aufbringung wird bei einer vollflächigen Aufbringung das Material im Wesentlichen auf der gesamten Oberfläche des Grundkörpers aufgetragen. Auch ist es denkbar, dass zur Auftragung das Material bzw. die Materialschicht zumindest teilweise automatisiert durch einen erfindungsgemäßen Druckformautomaten oder auch zumindest teilweise manuell aufgebracht und/oder aufgeklebt wird. Dabei kann die Druckbildstruktur für die Ausbildung einer Hochdruckform und/oder einer Tiefdruckform geeignet sein. Entsprechend einer Vorgabe (z. B. durch digitale Parameter) kann dabei beispielsweise das Material abhängig davon ausgewählt werden, ob eine Hochdruckform oder eine Tiefdruckform gewünscht ist. Das Material kann dazu beispielsweise eine der Vorgabe entsprechenden Elastizität aufweisen. Die Druckform umfasst dabei insbesondere die erzeugte Druckbildstruktur zusammen mit der Trägerschicht.

Vorzugsweise kann im Rahmen der Erfindung vorgesehen sein, dass gemäß Schritt b) die Druckbildstruktur in einem, insbesondere erfindungsgemäßen, Druckformautomaten, insbesondere durch eine Bearbeitungsvorrichtung des, insbesondere erfindungsgemäßen, Druckformautomaten, erzeugt wird. Die Bearbeitungsvorrichtung kann dabei insbesondere für ein Fertigungsverfahren geeignet sein, dass eine schnelle und effiziente Erzeugung der Druckbildstruktur beispielsweise unmittelbar und direkt an dem Grundkörper ermöglicht. Durch die Nutzung des erfindungsgemäßen Druckformautomaten und beispielsweise durch eine Integration des erfindungsgemäßen Druckformautomaten in eine Druckmaschine kann ein erfindungsgemäßes Verfahren für eine Vielzahl verschiedener Druckprozesse und Druckmaschinen eingesetzt werden. Vorzugsweise ist dabei vorgesehen, dass die Druckbildstruktur durch ein Fertigungsverfahren, insbesondere durch ein 3D-Druckverfahren, mit dem erfindungsgemäßen Druckformautomaten aufbringbar ist. Der Druckformautomat kann dabei beispielsweise als 3D-Drucker ausgebildet sein. Derartige Geräte können z. B. materielle, dreidimensionale Gegenstände auf Basis von digitalen CAD (Computer Aided Design)-Daten erzeugen. Die Daten stellen daher Vorlagen für die Druckbildstruktur dar, welche z. B. im STL (Surface Tesselation Language)-Format oder in einem sonstigen Datenformat vorliegen. Der Druckformautomat kann dabei beispielsweise den Gegenstand bzw. die Druckbildstruktur durch ein additives und/oder durch ein subtraktives Fertigungsverfahren herstellen, z. B. durch eine schichtweise Zusammensetzung der Druckbildstruktur. Hierdurch ist eine kostengünstige und flexible Herstellung der Druckbildstruktur möglich.

Es ist ferner denkbar, dass die Druckform am Grundkörper direkt an einer Druckmaschine hergestellt wird, wodurch der Druckprozess weiter beschleunigt und Kosten reduziert werden können. Dies ist unter anderem deshalb möglich, da der übliche Druckprozess weitgehend unverändert bleiben kann und daher keine umfangreichen Anpassungen zur Nutzung des Grundkörpers mit dem erfindungsgemäßen Verfahren notwendig sind. Es ist beispielsweise ausreichend, zur Herstellung der Druckformen einen erfindungsgemäßen Druckformautomaten zu nutzen, welcher die Druckbildstruktur direkt auf den Grundkörper aufbringt. Auch kann z. B. eine Aufbringung der Druckbildstruktur dadurch erfolgen und/oder eine bestehende Druckbildstruktur bzw. Druckbildschicht dadurch angepasst werden, dass z. B. durch den erfindungsgemäßen Druckformautomat Material verändert, aufgebracht und/oder abgetragen wird. Der erfindungsgemäße Druckformautomat kann dazu beispielsweise zur Durchführung additiver Fertigungsverfahren (wie 3D-Druck, Elektronenstrahlschmelzen, Laserschmelzen, Stereolithografie, selektives Laserschmelzen, Sintern, Lasersintern) und/oder subtraktiver Fertigungsverfahren (wie Abtragen, Laserabtragen, Thermisches Trennen, Elektronenstrahl-Trennen) und/oder Gravur (Lasergravur) und/oder Umformen geeignet sein.

Vorteilhaft ist es ebenfalls, wenn gemäß Schritt a) ein Abtragungs- und/oder Reinigungsprozess durchgeführt wird. Der Abtragungs- und/oder Reinigungsprozess kann beispielsweise auch automatisiert z. B durch den erfindungsgemäßen Druckformautomaten erfolgen, so dass hierzu keine separaten Arbeitsschritte notwendig sind. Für eine optimale Anbringung und/oder Erzeugung der Druckbildstruktur auf dem Grundkörper erfolgt dabei zunächst eine insbesondere vollständige Abtragung einer ggf. auf den Grundkörper bereits vorhandenen Druckbildstruktur. Durch den Reinigungsprozess kann ggf. der Grundkörper nach der Abtragung für die Aufnahme der Druckbildstruktur vorbereitet werden. Dies kann beispielswiese eine Reinigung mit chemischen und/oder Lösungsmitteln sein, um z. B. Schmutz und Überreste der vorherigen Druckbildstruktur zu entfernen. Auch ist es denkbar, dass der Abtragungs- und/oder Reinigungsprozess eine Behandlung der Grundkörperoberfläche umfasst, welche die Haftung der Druckbildstruktur optimiert. Dies kann beispielsweise die Aufbringung einer Klebemasse sein. Zur Durchführung des Abtragungs- oder Reinigungsprozesses weist der erfindungsgemäße Druckformautomat beispielsweise eine Reinigungseinheit und/oder eine Abtragungseinheit auf. Die Abtragung und/oder Reinigung, d. h. insbesondere die Entfernung des Materials einer vorherigen Druckbildstruktur auf dem Grundkörper, kann dabei z. B. mechanisch, d. h. z. B. spanend oder meißelnd erfolgen. Ebenfalls ist eine chemische Abtragung, z. B. mit Lösungsmitteln denkbar. Hierdurch wird eine zuverlässige Vorbereitung des Grundkörpers für die weiteren Verfahrensschritte ermöglicht.

Weiter kann im Rahmen der Erfindung vorgesehen sein, dass nach Schritt b) eine Nachbearbeitung der Druckbildstruktur erfolgt, wobei insbesondere die Druckbildschicht mit der Druckbildstruktur durch einen Schleifvorgang nachbearbeitet wird. Eine solche Nachbearbeitung der Druckbildstruktur dient insbesondere der Glättung der Oberfläche, um damit verbesserte Druckergebnisse zu erzielen. Die Nachbearbeitung kann dabei beispielsweise auch durch einen Abtragungs- und/oder Reinigungsprozess, durch eine Auswaschung von nicht benötigtem Material der Druckbildstruktur z. B. durch Lösungsmittel und z. B. auch die Entfernung nicht druckbarer Bereiche umfassen. Die Entfernung und/oder Reinigung kann dabei ebenfalls durch eine Abtragungs- und/oder Reinigungseinheit eines erfindungsgemäßen Druckformautomaten automatisiert erfolgen.

Gemäß einem weiteren Vorteil kann im Rahmen der Erfindung vorgesehen sein, dass gemäß Schritt b) eine elastische Schicht und/oder eine Trägerschicht auf dem Grundkörper aufgebracht werden, wobei insbesondere die Druckbildstruktur auf der Trägerschicht erzeugt wird. Die Aufbringung der elastischen Schicht und/oder der Trägerschicht kann dabei z. B. automatisiert durch einen erfindungsgemäßen Druckformautomaten erfolgen. Dies hat den Vorteil, dass der Grundkörper bereits soweit vorbereitet wird, dass er die Druckbildstruktur aufnehmen und für einen Druckprozess an einer Druckmaschine eingesetzt werden kann. Die elastische Schicht kann dabei z. B. ein Polymer, Schaumstoff, Klebemasse und/oder ein doppelseitiges Klebeband umfassen. Die Trägerschicht kann beispielsweise aus PET (Polyethylenterephthalat) ausgebildet sein. Dabei wird z. B. zunächst ein Schaumband (d.h. die elastische Schicht, welche z. B. aus Schaumstoff ausgebildet ist) und dann die Trägerschicht aufgetragen, wobei diese anschließend das Material für die Ausbildung der Druckbildschicht mit der Druckbildstruktur aufnehmen kann. Ebenfalls ist es denkbar, dass die Auswahl des Materials für die elastische Schicht und/oder der Trägerschicht und/oder der Druckbildschicht in Abhängigkeit einer Vorgabe z. B. durch den erfindungsgemäßen Druckformautomaten erfolgt. Die Vorgabe kann dabei z. B. umfassen, ob eine Druckform für ein Hochdruckverfahren und/oder ein Tiefdruckverfahren hergestellt werden soll. Auch kann diese Vorgabe beispielsweise an digitale Parameter angepasst sein, wie im Folgenden noch weiter beschrieben wird.

Ferner kann die Trägerschicht vorzugsweise derart ausgebildet sein, dass sie als Untergrund bzw. Unterlage zur Durchführung additiver Fertigungsverfahren, insbesondere 3D-Druck, subtraktiver Fertigungsverfahren, insbesondere Laserabtragen, Gravur, insbesondere Lasergravur, und/oder Umformen und zur Aufbringung bzw. Aufnahme der hierdurch hergestellten Druckbildstruktur geeignet ist. Dazu weist die Trägerschicht beispielsweise eine aufgeraute Oberfläche sowie eine dem Fertigungsverfahren angepasste Hitzebeständigkeit, Schmelzpunkt und/oder Festigkeit auf. Hierdurch wird die Widerstandsfähigkeit der Trägerschicht erhöht, um den Bedingungen bei der Aufbringung der Druckbildstruktur, wie einer hohen Temperatur, standhalten zu können.

Vorzugsweise kann im Rahmen der Erfindung vorgesehen sein, dass die Druckbildstruktur durch ein Fertigungsverfahren, insbesondere ein additives und/oder subtraktives Fertigungsverfahren, ein 3D-Druckverfahren und/oder durch Gravur, aus einem Material erzeugt wird. Somit kann flexibel und auf unterschiedliche Anforderungen angepasst, eine Druckbildstruktur erzeugt werden, welche auch bei unterschiedlichen Druckverfahren optimale Druckergebnisse ermöglicht. Dabei sind additive Fertigungsverfahren insbesondere positive Fertigungsverfahren, welche insbesondere darauf basieren, dass durch die Auftragung von Material die Druckbildstruktur entsteht. Dagegen bezeichnen subtraktive Fertigungsverfahren insbesondere negative Verfahren, wobei hier die Druckbildstruktur durch eine Abtragung von Material entsteht. Additive Fertigungsverfahren sind dabei beispielsweise 3D-Druckverfahren, Elektronenstrahlschmelzen, Laserschmelzen (selektives Laserschmelzen), Stereolithografie, Laser-Sintern bzw. selektives Laser-Sintern, Fused Deposition Modeling (Schmelzschichtung), Laminated Object Modeling, Kaltgasspritzen und/oder dergleichen. Die subtraktiven Fertigungsverfahren bezeichnen dabei insbesondere das Abtragen (wie z. B. Laserschneiden, Laserstrahlschmelzschneiden und ähnliche Verfahren), Laserabtragen, Laserbohren, Plasmaschneiden, Spanende Verfahren, thermisches Trennen, Elektronenstrahltrennen und/oder dergleichen. Die Fertigungsverfahren können dabei vorzugsweise für ein Rapid Prototyping geeignet sein. Auch die Gravur bzw. die Direktgravur kann ggf. den negativen Fertigungsverfahren zugeordnet werden. Auch ist es denkbar, dass zur Erzeugung der Druckbildstruktur ein Fertigungsverfahren, wie beispielsweise das Umformen zum Einsatz kommt. Die Auswahl und die Art der Auftragung des Materials auf den Grundkörper erfolgt dabei insbesondere in Abhängigkeit des eingesetzten Fertigungsverfahrens z. B. anhand einer Vorgabe oder digitaler Parameter. Dabei ist es denkbar, dass z. B. zur Direktgravur das Material als Materialschicht (Druckbildschicht) auf dem Grundkörper ausgebildet ist und beispielsweise durch den erfindungsgemäßen Druckformautomaten eine Gravur an dieser Materialschicht erfolgt. Die Erzeugung der Druckbildstruktur kann weiter beispielsweise derart durch das Fertigungsverfahren erfolgen, dass eine Polymerisierung des Materials insbesondere auf dem Grundkörper z. B. durch Wärme, Licht, Strahlung, Aushärten eines Heißklebers, durch Laser-Sintern und/oder durch einen Injekt-Kleber bewirkt wird. Vorzugsweise kann hierzu ein 3D-Druckverfahren zum Einsatz kommen, wobei z. B. gemäß einer (digitalen) Druckbildvorgabe ein erfindungsgemäßer Druckformautomat das Material erhitzt, welches hierdurch geschmolzen wird, und dann beispielsweise schichtweise auf den Grundkörper und/oder auf einen Träger bzw. eine Unterlage aufträgt und somit schichtweise die Druckbildstruktur ausbildet. Das Material kann dabei beispielsweise faserartig bzw. als Filament dem erfindungsgemäßen Druckformautomaten zugeführt werden. Durch die Verwendung eines additiven Fertigungsverfahren können dabei schnell 3D-Druckbildstrukturen bei nur geringerem Materialeinsatz erstellt werden, wobei bei den subtraktiven Fertigungsverfahren oft ein höherer Materialverlust in Kauf genommen werden muss, da Material zur Erzeugung der Druckbildstruktur weggenommen werden muss. Durch subtraktive Fertigungsverfahren oder auch durch die Gravur und insbesondere Lasergravur lassen sich jedoch schnell qualitativ sehr hochwertige Druckbildstrukturen erstellen. Dabei kann ein erfindungsgemäßer Druckformautomat gemäß dem erfindungsgemäßen Verfahren auch verschiedene Fertigungsverfahren ggf. auch kombiniert durchführen.

Es ist ferner denkbar, dass die Druckbildstruktur in einem ersten Schritt durch eine Vorbearbeitung, insbesondere durch ein additives Fertigungsverfahren, und in einem anschließenden zweiten Schritt durch eine Feinbearbeitung und/oder Gravur, insbesondere durch ein spanendes und/oder subtraktives Fertigungsverfahren, erzeugt wird. Somit lassen sich beispielsweise mit nur einem Automaten Druckbildstrukturen entsprechend einer Vorgabe in unterschiedlichen Qualitäten und innerhalb verschiedener Zeitenvorgaben herstellen. Durch die beschriebene Kombination von Fertigungsverfahren kann dabei das Ergebnis optimal gesteuert werden. Die Vorbearbeitung und/oder Feinbearbeitung kann dabei insbesondere gemäß den zuvor beschriebenen Fertigungsverfahren durchgeführt werden, wobei beispielsweise bei der Vorbearbeitung ein anderes Fertigungsverfahren Anwendung finden kann als für die Feinbearbeitung. Die Gravur kann dabei beispielsweise auch eine Direktgravur, d. h. direkt an dem Grundkörper, welcher die Materialschicht aufweist, erfolgen. Die Gravur kann dabei beispielsweise eine Feingravur z. B. mit einem Laser sein. Hierdurch können insbesondere feine Strukturen der Druckbildstruktur mit sehr hoher Genauigkeit ausgebildet werden.

Ferner ist es denkbar, dass die Druckbildstruktur durch ein Auslasern eines Materials erzeugt wird, wobei insbesondere das Material vor dem Auslasern zumindest teilweise, insbesondere spanend, entfernt wird. Hierdurch kann insbesondere die Geschwindigkeit zur Erzeugung der Druckbildstruktur erhöht werden, da beispielsweise zunächst für die grobe Struktur das Material spanend entfernt und anschließend für die feine Struktur ausgelasert wird.

Gemäß einer bevorzugten Weiterbildung eines erfindungsgemäßen Verfahrens kann vorgesehen sein, dass zur Erzeugung der Druckbildstruktur, insbesondere bei einer Vorbearbeitung, zunächst ein Material aufgebracht und anschließend, insbesondere durch UV-Licht und/oder Elektronenstrahlhärten, ausgehärtet wird. Durch die Aushärtung kann insbesondere eine Polymerisierung des Materials erfolgen. Dies hat den Vorteil, dass das Material zunächst z. B. mit hoher Geschwindigkeit flüssig oder viskos aufgetragen werden kann und anschließend die Struktur dadurch erzeugt wird, dass insbesondere entsprechend der Druckbildvorgabe das Material an bestimmten Positionen durch Licht, insbesondere durch UV-Licht, bestrahlt und dadurch ausgehärtet wird.

Außerdem kann es im Rahmen der Erfindung von Vorteil sein, dass die Druckbildstruktur direkt in einer Druckmaschine auf einem Grundkörper erzeugt wird, wobei insbesondere der Grundkörper an einem Dorn der Druckmaschine montiert ist. Das erfindungsgemäße Verfahren kann damit insbesondere direkt an dem Grundkörper durchgeführt werden, welcher sich in der Druckmaschine und insbesondere an einem Dorn der Druckmaschine befindet. Der Grundkörper muss damit nicht von dem Dorn entfernt werden und kann nach der Erzeugung der Druckbildstruktur direkt wieder für den Druckprozess eingesetzt werden. Hierzu kann beispielsweise ein erfindungsgemäßer Druckformautomat in der Druckmaschine oder in einer Vorbereitungs- und/oder Aufbewahrungsstation, die bevorzugt auch als Lager dienen kann, integriert sein. Dadurch ergeben sich deutliche Geschwindigkeitsvorteile bei der Anpassung oder Erneuerung einer Druckbildstruktur.

In einer weiteren Möglichkeit kann ein Material zur Erzeugung der Druckbildstruktur durch ein Auftragsverfahren aufgebracht wird, insbesondere durch Extrudieren, Sprühen, Sintern, Schlitzdüsenbeschichtung, Gießen, Spachteln, Rakeln und/oder Kleben. Dazu kann ein Extruder des erfindungsgemäßen Druckformautomaten vorgesehen sein, welcher beispielsweise an verschiedenen Positionen an dem Grundkörper bewegbar ist, um dort gemäß dem Auftragsverfahren das Material aufzubringen. Auch kann zur Durchführung des Auftragsverfahrens eine Schichtauftragungseinheit des erfindungsgemäßen Druckformautomaten vorgesehen sein. Hierdurch kann mit hoher Genauigkeit beispielsweise schichtweise das Material zur Ausbildung der Druckbildstruktur auf den Grundkörper und/oder auf eine Trägerschicht aufgebracht werden. Insbesondere durch das Sprühen lässt sich dabei eine gleichmäßige Druckbildschicht auf dem Grundkörper erzeugen. Durch das Sintern kann auch bei geringeren Temperaturen als beim Schmelzen (unterhalb der Schmelztemperatur des Materials) die Druckbildstruktur aus dem Material ausgebildet werden. Somit kann beispielsweise die Trägerschicht des Grundkörpers eine geringere Hitzebeständigkeit aufweisen und vor Beschädigungen geschützt werden. Durch den Einsatz der Schlitzdüsenbeschichtung lassen sich Schichtdicken, beispielsweise der Druckbildschicht, genau bestimmen. Weiter zeichnen sich die beschriebenen Auftragsverfahren durch einen einfachen und kostengünstigen Einsatz aus, insbesondere das Gießen, Spachteln, Rakeln und/oder Kleben. Zur weiteren Vereinfachung können solche Auftragsverfahren wie z. B. das Kleben auch manuell durchgeführt werden. Auch ist es denkbar, dass die beschriebenen Auftragsverfahren zur Aufbringung der Trägerschicht, der elastischen Schicht und/oder der Druckbildschicht verwendet werden.

Vorteilhafterweise kann im Rahmen der Erfindung vorgesehen sein, dass eine Ansteuerung einer Bearbeitungsvorrichtung und/oder die Auswahl eines Materials zur Erzeugung der Druckbildstruktur an digitale Parametern angepasst wird, wobei insbesondere die digitalen Parameter von dem Grundkörper kontaktlos übertragen werden. Die Bearbeitungsvorrichtung kann dabei insbesondere an dem erfindungsgemäßen Druckformautomat vorgesehen sein, wobei beispielsweise durch die Bearbeitungsvorrichtung und/oder den erfindungsgemäßen Druckformautomat die digitalen Parameter von dem Grundkörper empfangbar sind. Dazu überträgt der Grundkörper beispielsweise die digitalen Parameter über eine Funkverbindung an eine Kommunikationsvorrichtung des erfindungsgemäßen Druckformautomaten. Der Grundkörper steht beispielsweise somit mit dem erfindungsgemäßen Druckformautomaten in kontaktloser Verbindung umso z. B. über eine bidirektionale Datenübertragung Daten senden und empfangen zu können. Die Daten und/oder digitalen Parameter können dabei Fertigungsparameter, den Durchmesser des Grundkörpers, den Grundkörper des Druckzylinders oder des Dorns, Werte für Fertigungstoleranzen, den maximalen Anpressdruck, Daten der Druckmaschine, eine eindeutige Nummer zur Identifizierung des Grundkörpers bzw. des Sleeves und/oder dergleichen umfassen. Auch können die Daten und/oder digitalen Parameter das Druckbild bzw. die Druckbildvorlage umfassen, welche somit über die Kommunikationsvorrichtung an dem erfindungsgemäßen Druckformautomaten zur Erzeugung der Druckbildstruktur übertragbar ist. Auf diese Weise eignen sich die digitalen Parameter und/oder übertragenden Daten, ein erfindungsgemäßes Verfahren zu steuern und für verschiedene Anforderungen anzupassen. Auch ist es denkbar, dass die Daten von dem Grundkörper und/oder dem erfindungsgemäßen Druckformautomaten an eine Druckmaschine übertragen werden. Auf diese Weise lässt sich eine effiziente Automatisierung verwirklichen.

Vom weiteren Vorteil kann die Druckbildstruktur aus einem Material, insbesondere aus einem Mehrkomponenten-Erzeugnis, einem Polymer, Maisstärke, Heißkleber, einem Elastomer, EPDM (Ethylen-Propylen-Dien-Kautschuk), Kautschuk und/oder Pulver ausgebildet ist. Dabei kann das Mehrkomponenten-Erzeugnis beispielsweise durch Mehrkomponenten-Spritzgießen erzeugt worden sein und somit aus verschiedenen Arten von Kunststoffen ausgebildet sein. Dies hat den Vorteil, dass die Materialeigenschaften sehr exakt vorbestimmt werden können. Maisstärke stärker eignet sich dabei insbesondere für die Herstellung von Filamenten für ein 3D-Druckverfahren und besitzt den Vorteil, umweltfreundlich und biologisch abbaubar zu sein. Ferner kann es für einen Einsatz mit einem 3D-Druckverfahren vorteilhaft sein, da es beim Abkühlen weniger schrumpft und damit bessere Erzeugnisse realisierbar sind. Weiter ist es denkbar, dass als Material auch ein ABS (Acrylnitril-Butadien-Styrol) bzw. ein synthetisches Terpolymer Verwendung findet, welches ein besonders formstabiles und witterungsbeständiges Material ist. Um eine Materialschrumpfung zu reduzieren, kann dabei vorgesehen sein, dass eine Unterlage z. B für das 3D-Druckverfahren und/oder die Trägerschicht und/oder der Grundkörper vorbeheizbar ausgebildet sind und beispielsweise auf eine Temperatur von insbesondere 80°C bis 110°C vorbeheizt wird. Vorzugsweise findet die Vorbeheizung vor dem Auftragen der Druckbildschicht und/oder dem Ausbilden der Druckbildstruktur statt. Auch kann ggf. das Material aus PLA (Polylactic-Acid) ausgebildet sein, wobei hierbei das Material zur Erzeugung der Druckbildstruktur insbesondere auf 180 bis 230°C erhitzt wird, damit es auf die Trägerschicht und/oder dem Grundkörper flüssig aufgebracht werden kann. Dabei hat PLA den Vorteil, dass es eine hohe UV-Beständigkeit besitzt und eine geringe Entflammbarkeit. Der Vorteil eines Einsatzes von EPDM ist, dass dieses ebenfalls UVbeständig und dabei besonders langlebig und hoch flexibel ist. Elastomere und/oder Kautschuk besitzt dagegen eine besonders hohe Reißfestigkeit. Diese Vorteile können durch den Einsatz eines Mehrkomponentenerzeugnisses aus den beschriebenen Materialien kombiniert und somit weiter optimiert werden.

Es ist ferner denkbar, dass die Trägerschicht eine harte Schicht aus einem Kunststoff, insbesondere aus Polyester, Polyurethan und/oder PET (Polyethylenterephthalat), ausgebildet ist. Dabei ist bei der Verwendung von Polyester die sehr gute Formstabilität für die Aufbringung der Druckbildstruktur vorteilhaft. Polyurethan besitzt eine sehr hohe Reißfestigkeit, wobei PET eine sehr gute Formbeständigkeit und Bruchfestigkeit auch bei hohen Temperaturen besitzt. Der Schmelzpunkt von PET, welcher bei 250°C bis 260°C liegt, ist zudem besonders geeignet für ein 3D-Druckverfahren oder ähnliche Fertigungsverfahren bei hohen Temperaturen. Weiter kann vorzugsweise die Trägerschicht auch aus einem Kunststoff mit einen Schmelzpunkt über 300°C ausgebildet sein. Somit kann eine Beschädigung der Trägerschicht bei der Aufbringung der Druckbildstruktur verhindert werden.

Die Trägerschicht weist dabei insbesondere einen höheren Härtegrad als die elastische Schicht auf und besitzt daher eine geringere Elastizität und z. B. eine höhere Festigkeit (z. B. Druck-, Kompressions- und/oder Biegefestigkeit). Ebenfalls ist es denkbar, dass die Trägerschicht eine Beschichtung aufweist, wobei die Beschichtung z. B. eine höhere Festigkeit und/oder Härte als das Innenmaterial der Trägerschicht aufweist. Weiter kann die Trägerschicht zumindest einseitig z. B. auch eine flexible, elastische und/oder klebende Außenschicht aufweisen. Ebenfalls kann die Außenfläche, auf welcher die Druckbildstruktur ausgebildet ist, insbesondere derart ausgebildet sein, dass eine einfache Ablösung (Peeling) der aufgebrachten Druckbildstruktur möglich ist. Dies wird durch ein durch die Ausgestaltung der Trägerschicht bedingtes Adhäsionsversagen bei Krafteinwirkung ermöglicht. Somit ist eine zuverlässige Aufbringung der Druckbildstruktur möglich. Außerdem kann die Trägerschicht besonders geeignet sein, eine Haftung zur Druckbildschicht zu bilden, wenn die Trägerschicht aus einem Kunststoff mit hoher Oberflächenenergie ausgebildet ist.

Vorteilhafterweise kann im Rahmen der Erfindung vorgesehen sein, dass die elastische Schicht aus einem Schaumstoff, insbesondere aus Polyurethan, Polypropylen, Polyethylen, Polystyrol, PET und/oder Biopolymere, ausgebildet ist. Weiter ist es denkbar, dass die elastische Schicht zumindest teilweise auch aus Polymeren, aus Gummi und/oder als Kunststoffband ausgebildet ist. Auch hier ergeben sich die Vorteile, wie sie zuvor für die Trägerschicht beschrieben worden sind. Insbesondere kann bei der Nutzung von Kunststoffen wie PET, Polyurethan oder dergleichen eine Beschädigung der elastischen Schicht verhindert werden, wenn die Kunststoffe eine hohe Reißfestigkeit und Formstabilität aufweisen. PET weist zudem einen hohen Schmelzpunkt auf, wodurch eine Beschädigung bei hohen Temperaturen vermieden wird. Besonders Elastomere, z. B. aus Polyurethane, sind aufgrund der elastischen Eigenschaften und hohen Reißfestigkeit für die Ausbildung der elastischen Schicht geeignet. Ferner besitzt Polypropylen eine besonders hohe Steifigkeit, Härte und Festigkeit und eignet sich besonders zur Herstellung eines Schaumstoffes für die elastische Schicht. Auch Polyethylen, Polystyrol und Biopolymere sind sehr gut zur Herstellung eines Schaumstoffes geeignet und besitzen zudem eine geringe Wasseraufnahme, eine gute Temperaturbeständigkeit und eine hohe Zähigkeit.

Ferner kann die elastische Schicht kompressibel ausgebildet sein, wodurch sie sich besonders für den Rasterdruck eignet. Als elastische und kompressible Schicht verformt sich die elastische Schicht des Grundkörpers derart, dass der sogenannte Dot-Gain und damit verbundene Qualitätseinbußen des Druckes reduziert werden können. Der Dot-Gain führt dabei zu unerwünschten Effekten bei dem Druckvorgang, da sich Druckpunkte elastisch verbreitern. Zur Reduzierung des Dot-Gains kann beispielsweise auch vorgesehen sein, dass die elastische Schicht alternativ eine geringere Kompressibilität als die Trägerschicht aufweist, wobei dann ggf. die äußere Trägerschicht eine entsprechend höhere Elastizität als die elastische Schicht aufweist.

Ferner kann im Rahmen der Erfindung vorgesehen sein, dass die elastische Schicht als einseitig oder beidseitig klebendes Klebeband ausgebildet ist und/oder eine einseitige oder beidseitige Haftklebemasse aufweist. Zum Halten der Trägerschicht und/oder zur Anbringung an der Hülse kann die elastische Schicht vorzugsweise als Klebeband ausgebildet sein und/oder eine Haftklebemasse aufweisen. Alternativ kann die elastische Schicht auch weitere Halte- bzw. Befestigungsmittel aufweisen, wie beispielsweise magnetisierbare Körper und insbesondere ferromagnetische Körper. Somit kann eine Befestigung durch Magnetisierung erfolgen. Um eine harte Verklebung zu erzielen, kann die elastische Schicht z. B. eine Dicke von im Wesentlichen 0,1 mm aufweisen und um eine weiche Verklebung zu ermöglichen kann die elastische Schicht beispielsweise eine Dicke von im Wesentlichen 0,2 mm bis 1 mm aufweisen. Die beschriebene Art der Verklebung (hart oder weich) bestimmt dabei in entscheidender Weise das Auftreten von Druckspitzen während des Druckprozesses und beeinflusst die Druckqualität. Die Haftklebemasse kann z. B. auf Naturkautschukbasis, auf Polyacrylatbasis, auf Blockcopolymerbasis und/oder auf Acrylbasis ausgebildet sein. Somit bietet die Klebemasse eine gute und sichere Verklebung, wobei die Klebemasse insbesondere zur Verklebung auf PET geeignet und ggf. ablösbar ausgebildet sein kann. Ferner ist es denkbar, dass die Klebemasse, das Klebeband und/oder die elastische Schicht selbstklebend, kompressibel und/oder permanentklebend ausgebildet sind. Die Oberfläche der elastischen Schicht weist beispielsweise eine schrumpffreie und ggf. härtere, festere Schicht auf, um den Schaumstoff zu stabilisieren.

Vom weiteren Vorteil kann im Rahmen der Erfindung vorgesehen sein, dass zur Befestigung der elastischen Schicht eine erste Klebeschicht und/oder zur Befestigung der Trägerschicht eine zweite Klebeschicht vorgesehen ist, wobei insbesondere die erste und zweite Klebeschicht als beidseitig klebendes Klebeband ausgebildet sind. Es ist somit denkbar, dass z. B. ausschließlich eine erste Klebeschicht und/oder ausschließlich eine zweite Klebeschicht vorgesehen ist, wobei die Klebeschichten auch mit unterschiedlichen Eigenschaften (z. B. einer unterschiedlichen Dicke und/oder einem unterschiedlichen Material) ausgebildet sein können. Weiter können die Klebeschichten auch die Merkmale und Details aufweisen, welche zuvor im Zusammenhang mit der elastischen Schicht und dem Klebeband beschrieben worden sind. Hierdurch ergibt sich der Vorteil, dass eine sichere Fixierung der elastischen Schicht und/oder der Trägerschicht auf dem Grundkörper möglich ist.

Es ist ferner denkbar, dass die elastische Schicht eine Dicke von 0,1 mm bis 2 mm, insbesondere von 0,5 mm bis 1 mm hat und/oder die Trägerschicht eine Dicke von 100 µm bis 1000 µm, insbesondere von im Wesentlichen 300 µm hat und/oder die Druckbildschicht mit der Druckbildstruktur eine Dicke von 0,1 mm bis 10 mm, insbesondere von im Wesentlichen 0,5 mm bis 1 mm hat. Ebenfalls kann vorgesehen sein, dass der Grundkörper einen Umfang von 250 mm bis 1500 mm aufweist. Durch die beschriebene Ausgestaltung des Grundköpers werden vorteilhafte Eigenschaften für den Druckprozess, insbesondere zur Reduzierung von Druckspitzen erzielt. Zudem kann die beschriebene Ausgestaltung des Grundkörpers bestimmte störende Schwingungsfrequenzen des Grundkörpers bzw. Druckzylinders, welche bei der Rotation während eines Druckvorgangs entstehen, filtern und so die Druckqualität und die Lebensdauer verbessern. Dabei ist es denkbar, dass die Dicken der Schichten des Grundkörper, z. B. innerhalb der beschriebenen Grenzen für die Dicken, den Eigenschaften der verwendeten Druckmaschine und z. B. den Druckzylindern (z. B. dem Umfang) angepasst sind, um eine optimale Frequenzfilterung zu erreichen.

Vorteilhafterweise kann im Rahmen der Erfindung vorgesehen sein, dass Daten, insbesondere digitale Parameter, von einer Informationsvorrichtung des Grundkörpers durch eine Kommunikationseinheit an eine Kommunikationsvorrichtung eines erfindungsgemäßen Druckformautomaten übertragen werden. Die Informationsvorrichtung des Grundkörpers dient dabei insbesondere zum Datenaustausch mit einer Druckmaschine und/oder mit dem erfindungsgemäßen Druckformautomaten. Dabei kann die Kommunikationseinheit der Informationsvorrichtung insbesondere zur kontaktlosen Datenübertragung nach einem RFID (Radio Frequency Identification), NFC (Near Field Communication) und/oder Bluetooth-Standard geeignet sein. Weiter kann der Grundkörper ggf. eine nicht-flüchtige Speichereinheit aufweisen, wobei die nicht-flüchtige Speichereinheit einen Identifikationscode, insbesondere zur eindeutigen Identifizierung des Grundkörpers an der Druckmaschine umfasst. Hierdurch kann beispielswiese der Grundkörper sowohl eine Druckmaschine als auch an dem erfindungsgemäßen Druckformautomaten eindeutig identifiziert werden und z. B. in Abhängigkeit von dem Identifikationscode ein bestimmtes Fertigungsverfahren, Aufteilungsverfahren und/oder eine bestimmte Materialart zum Einsatz kommen. Ferner ist es denkbar, dass die nicht-flüchtige Speichereinheit mit Daten, insbesondere digitalen Parametern, durch den erfindungsgemäßen Druckformautomaten und/oder durch die Druckmaschine beschrieben wird. Auf diese Weise kann eine automatisierte Herstellung und Integration der Druckbildstruktur im Druckprozess erfolgen.

Weiter kann im Rahmen der Erfindung vorgesehen sein, dass durch die Bearbeitungsvorrichtung der Grundkörper und/oder die Trägerschicht mit einer elastischen Schicht versehen wird, wobei die elastische Schicht insbesondere zum Halten der Trägerschicht am Grundkörper geeignet ist. Hierdurch ist der erfindungsgemäße Druckformautomat mit der Bearbeitungsvorrichtung in der Lage, den Grundkörper zur Aufnahme der Druckbildstruktur vorzubereiten und insbesondere ebenfalls die Druckbildstruktur zu erzeugen. Es kann also ein einziger erfindungsgemäßer Druckformautomat für eine Vielzahl von notwendigen Arbeitsschritten vorgesehen sein.

Ebenfalls Gegenstand der Erfindung ist ein Druckformautomat zur Erzeugung einer Druckbildstruktur gemäß einer Druckbildvorgabe, insbesondere für ein Hochdruckverfahren und/oder Tiefdruckverfahren, insbesondere für den Flexodruck, mit einer Bearbeitungsvorrichtung zur Erzeugung der Druckbildstruktur durch eine Bearbeitung eines Materials, und einer Steuervorrichtung zur Steuerung der Bearbeitungsvorrichtung, wobei die Bearbeitungsvorrichtung derart ausgebildet ist, dass die Druckbildstruktur aus dem Material gemäß einer Druckbildvorgabe erzeugbar ist,
wobei der Druckformautomat (50) eine Bearbeitungsvorrichtung (51) für ein additives Fertigungsverfahren aufweist und derart gebildet ist, dass eine Ansteuerung der Bearbeitungsvorrichtung (51) an digitale Parameter anpassbar ist, wobei die Daten von der Bearbeitungsvorrichtung (51) an eine Druckmaschine (40) übertragbar sind. Damit bringt der erfindungsgemäße Druckformautomat die gleichen Vorteile mit sich, wie sie ausführlich mit Bezug auf ein erfindungsgemäßes Verfahren erläutert worden sind. Zudem kann der erfindungsgemäße Druckformautomat geeignet sein, mit einem erfindungsgemäßen Verfahren betrieben zu werden und/oder ein erfindungsgemäßes Verfahren auszuführen.

Der erfindungsgemäße Druckformautomat weist dabei z. B. einen 3D-Drucker auf, welcher auf Grundlage einer Druckbildvorgabe (wie einer CAD-Datei mit Vorgaben für das spätere Druckbild) eine drei-dimensionale Struktur erzeugt. Hierdurch wird insbesondere die Druckbildstruktur ausgebildet, welche geeignet ist, das Druckbild auf einen Bedruckstoff in einem Druckprozess zu übertragen. Die Druckbildvorgabe kann dabei digital ausgebildet z.B. in einer nicht-flüchtigen Speichervorrichtung des erfindungsgemäßen Druckformautomaten gespeichert sein. Für die Erzeugung der Druckbildstruktur weist der erfindungsgemäße Druckformautomat insbesondere eine Bearbeitungsvorrichtung für eine additive, subtraktive und/oder ein formendes Fertigungsverfahren, wie z. B. Umformen und/oder für eine Gravur auf. Dabei zeichnet sich der erfindungsgemäße Druckformautomat insbesondere dadurch aus, dass eine schnelle und kostengünstige Anpassung und/oder Erzeugung der Druckbildstruktur, insbesondere direkt auf dem Grundkörper durchführbar ist.

Vorteilhafterweise kann im Rahmen der Erfindung vorgesehen sein, dass eine nicht-flüchtige Speichervorrichtung des erfindungsgemäßen Druckformautomaten vorgesehen ist, welche die Druckbildvorgabe und insbesondere digitale Parameter für die Erzeugung der Druckbildstruktur auf einen Grundkörper umfasst. Die digitalen Parameter können dabei z. B. durch eine externe Datenverarbeitungsvorrichtung in die nicht-flüchtige Speichervorrichtung gespeichert werden und/oder von einem Grundkörper an den erfindungsgemäßen Druckformautomaten insbesondere kontaktlos übertragen werden. Dabei weist der Grundkörper insbesondere eine nicht-flüchtige Speichereinheit auf, wobei auch die nicht-flüchtige Speichereinheit digitale Daten mit Informationen über das Druckbild, die Druckbildvorgabe und digitale Parameter umfasst, insbesondere mit Fertigungsinformationen für ein Fertigungsverfahren und/oder für einen erfindungsgemäßen Druckformautomaten. Diese digitalen Daten können nach der Übertragung von dem Grundkörper an den erfindungsgemäßen Druckformautomaten beispielsweise in der nicht-flüchtigen Speichervorrichtung, insbesondere für die Dauer der Erzeugung der Druckbildstruktur durch den erfindungsgemäßen Druckformautomaten gespeichert bleiben. Zudem kann der erfindungsgemäße Druckformautomat die Erzeugung der Druckbildstruktur anhand der übertragenen bzw. gespeicherten Daten steuern und anpassen.

Bevorzugt kann bei dem erfindungsgemäßen Druckformautomaten vorgesehen sein, dass eine Steuervorrichtung mit einer Kommunikationsvorrichtung zur Datenübertragung vorgesehen ist, insbesondere zur Datenübertragung mit einem Grundkörper und/oder mit einer Druckmaschine. Zur Datenübertragung kann dabei insbesondere eine Funkverbindung, z. B. mit der Druckmaschine und/oder mit dem Grundkörper vorgesehen sein. Hierdurch ist eine kontaktlose Datenübertragung möglich, wobei die Daten insbesondere digitale Daten mit Informationen über das Druckbild und/oder digitale Parameter umfassen. Dabei ist es denkbar, dass die Kommunikationsvorrichtung zur kontaktlosen Datenübertragung nach einem Kommunikationsstandard wie RFID, NFC oder Bluetooth geeignet ist. Es ist somit eine sichere und zuverlässige Datenübertragung z. B. ein Senden an die Druckmaschine und/oder an dem Grundkörper und/oder ein Empfang von der Druckmaschine und/oder dem Grundkörper möglich. Die Kommunikationsvorrichtung kann zur Datenübertragung beispielsweise mit einer Kommunikationseinheit des Grundkörpers kommunizieren, wobei die Kommunikationseinheit z. B. einen Transponder zur kontaktlosen Energieübertragung aufweist und die Kommunikationsvorrichtung geeignet ist die Kommunikationseinheit durch die Induktion einer Spannung durch ein elektromagnetisches Feld zu betreiben. Weiter kann auch eine Funkverbindung zur Datenübertragung, wie beispielsweise eine HF (High Frequency) oder LF (Low Frequency) vorgesehen sein. Somit ist eine sichere und zuverlässige Übertragung von Daten zwischen unterschiedlichen Maschinen möglich, um eine einfache Automatisierung zu ermöglichen.

Weiter kann gemäß einer bevorzugten Weiterentwicklung eines erfindungsgemäßen Druckformautomaten vorgesehen sein, dass die nicht-flüchtige Speichervorrichtung des erfindungsgemäßen Druckformautomaten einen Identifikationscode zur eindeutigen Identifizierung des Grundkörpers umfasst. Die Speichervorrichtung kann beispielsweise einen Datenträger wie eine Festplatte, ein Flashspeicher, ein SD-Speicher (Secure Digital Memory Card), ein SSD-Speicher (Solid-State-Drive) und/oder EPROM (Erasable Programmable Read-Only Memory) sein. Somit ist eine dauerhafte Speicherung des Identifikationscode und/oder von sonstigen digitalen Daten wie digitalen Parametern möglich, unabhängig von einer Energieversorgung. Ferner kann die Speichervorrichtung das Druckbild umfassen, welches beispielsweise in einem STL-Format (Surface Tesslation Language) und/oder in einem sonstigen CRD-Format in der Speichervorrichtung vorgesehen sein. Ebenfalls können die digitalen Daten zumindest teilweise verschlüsselt gespeichert sein. Hierdurch ist eine Kommunikation mit unterschiedlichen Grundkörpern und Druckmaschinen möglich, da unterschiedlichste Formate und Verschlüsselungen unterstützt sein können.

Es ist ferner denkbar, dass die Bearbeitungsvorrichtung eine Energiequelle, insbesondere eine Laserquelle, aufweist, wodurch ein Fertigungsverfahren, insbesondere ein 3D-Druckverfahren und/oder eine Gravur, durchführbar ist. Hierdurch können hohe Temperaturen z. B. zum Schmelzen oder Sintern erzeugt werden und damit das Material zuverlässig bearbeitet werden. Um eine möglichst genaue Erzeugung der Druckbildstruktur zu erreichen, kann eine optische Vorrichtung vorgesehen sein, um die Strahlung der Energiequelle auf einer möglichst kleinen Fläche auf dem Grundkörper bzw. der Trägerschicht zu fokussieren. Die Energiequelle kann dabei beispielsweise eine Energiequelle zur Erzeugung thermischer Energie, eine UV-Strahlungsquelle, ein CO2-Laser, ein ND:YAG-Laser oder ein sonstiger Gas- oder Festkörperlaser sein, welcher insbesondere eine Ausgangsleistung bis zu 1 kW (Kilowatt), 10 kW, 50 kW, 1 MW (Megawatt) oder 2 MW zu erreichen. Auf diese Weise kann das Material schnell und zuverlässig erhitzt werden und eine schnelle und qualitativ hochwertige Erzeugung einer Druckbildstruktur ermöglicht werden. Auch ist es denkbar, dass zumindest ein Diodenlaser eingesetzt wird, wodurch die Kosten für die Energiequelle stark verringert werden. Weiter ist es denkbar, das unterschiedliche Energiequellen und damit zumindest zwei Energiequellen vorgesehen sind, wobei beispielsweise eine erste Bearbeitungsvorrichtung eine erste Energiequelle und eine zweite Bearbeitungsvorrichtung eine zweite Energiequelle aufweist. Dies ist vorteilhaft, da unterschiedliche Materialien eine unterschiedliche Absorptionscharakteristik aufweisen und daher eine Energiequelle nicht für jedes Material geeignet ist. Durch den Einsatz verschiedener Energiequellen ist es möglich, z. B. entsprechend einer Vorgabe und entsprechend des eingesetzten Materials eine geeignete Energiequelle für die Erzeugung der Druckbildstruktur auswählen.

Vorteilhafterweise kann im Rahmen der Erfindung vorgesehen sein, dass eine erste Bearbeitungsvorrichtung zur Vorbearbeitung des Materials und eine zweite Bearbeitungsvorrichtung zur Feinbearbeitung und/oder Gravur des Materials vorgesehen ist. Hierdurch kann die Qualität der erzeugten Druckbildstruktur deutlich erhöht werden. Dabei kann eine erste Bearbeitungsvorrichtung z. B. eine Schichtauftragungseinheit zur Schichtauftragung durch ein additives Fertigungsverfahren aufweisen und eine zweite Bearbeitungsvorrichtung z. B. eine Bearbeitungseinheit für ein Fertigungsverfahren zur Erzeugung der Druckbildstruktur, insbesondere eine Gravur oder Feinbearbeitung aufweisen. Ggf. kann weiter auch eine dritte Bearbeitungsvorrichtung vorgesehen sein, welche z. B. eine Bearbeitungseinheit zur Gravur oder Reinigungseinheit zur Reinigung aufweist.

In einer weiteren Möglichkeit kann die Bearbeitungsvorrichtung derart durch die Steuervorrichtung ansteuerbar ist, dass die Druckbildstruktur auf Teilbereiche auf dem Grundkörper erzeugbar ist, wobei die Teilbereiche durch eine Auswertevorrichtung gemäß der Druckbildvorgabe bestimmbar sind. Auf diese Weise kann der Materialaufwand deutlich reduziert werden, da nur dort eine Druckbildstruktur erzeugt wird und Material zur Druckbilderzeugung angebracht werden muss, wo gemäß der Druckbildvorgabe eine Druckbildstruktur auch notwendig ist. Die üblicherweise notwendige vollflächige Beschichtung mit der Druckbildschicht entfällt somit.

Es ist ferner denkbar, dass eine erste Bearbeitungsvorrichtung für eine additive Erzeugung der Druckbildstruktur und eine zweite Bearbeitungsvorrichtung für eine subtraktive Erzeugung und/oder Gravur der Druckbildstruktur vorgesehen ist. Dabei kann die Steuervorrichtung ggf. derart die Bearbeitungsvorrichtung bzw. Bearbeitungsvorrichtungen ansteuern, dass eine Druckbildstruktur für eine Hochdruckform oder für eine Tiefdruckform erzeugbar ist. Hierdurch ist der erfindungsgemäße Druckformautomat für eine Vielzahl von Anwendungsfällen geeignet.

Vorteilhafterweise kann im Rahmen der Erfindung vorgesehen sein, dass durch die Steuervorrichtung das Material zur Erzeugung der Druckbildstruktur in Abhängigkeit von einem vorgegebenen Parameter auswählbar und auftragbar ist. Der vorgegebene Parameter kann dabei beispielsweise als digitaler Parameter in der nicht-flüchtigen Speichervorrichtung gespeichert sein. In Abhängigkeit der Parameter kann das Material beispielsweise nach Materialeigenschaften wie der Flexibilität, der Elastizität, der Widerstandsfähigkeit und/oder der Festigkeit des Materials ausgebildet werden. Auch kann die Auswahl des Materials in Abhängigkeit einer Vorgabe erfolgen, ob ein Hochdruck- oder Tiefdruckform erzeugt werden soll, wobei bei einer Hochdruckform das Material insbesondere flexibel und bei einer Tiefdruckform das Material insbesondere härter als bei der Hochdruckform ausgewählt wird. Der erfindungsgemäße Druckformautomat ist damit für verschiedene Druckverfahren und Druckmaschinen einsetzbar.

Es ist ferner denkbar, dass der erfindungsgemäße Druckformautomat eine Transportvorrichtung zur Bewegung des Grundkörpers und/oder der Druckbildstruktur aufweist. Hierdurch wird eine weitere Automatisierung ermöglicht, um die notwendige Dauer zur Erzeugung einer Druckbildstruktur noch weiter zu verringern. Dabei kann die Transportvorrichtung insbesondere zumindest ein Transportband, eine Stapelvorrichtung und/oder einen industriellen Roboterarm aufweisen, um damit beispielsweise das Material und/oder die Druckform und/oder den Grundkörper zu bewegen. Die Transportvorrichtung weist ggf. auch eine Zuführeinheit auf, so dass mittels der Zuführeinheit eine Zuführung der Grundkörper bzw. der Hülsen von beispielsweise einem Grundkörperlager zur Bearbeitung mit dem erfindungsgemäßen Druckformautomaten möglich ist.

Vorteilhafterweise kann im Rahmen der Erfindung vorgesehen sein, dass der erfindungsgemäße Druckformautomat eine Führungsvorrichtung, insbesondere eine Linearführung, aufweist, wobei insbesondere die Bearbeitungsvorrichtung an der Führungsvorrichtung beweglich angeordnet ist. Die Bearbeitungsvorrichtung kann insbesondere revolverartig, an einer Transportkette der Führungsvorrichtung angeordnet und/oder an einer Linearführung der Führungsvorrichtung angeordnet sein. Dabei ist die Führungsvorrichtung insbesondere derart ausgebildet, dass ein form- und/oder kraftschlüssiges Halten der Bearbeitungsvorrichtung bzw. der Bearbeitungsvorrichtungen möglich ist. Die Bearbeitungsvorrichtungen können damit zuverlässig für eine Bearbeitung eines Materials an bestimmte Stellen eines Grundkörpers positioniert werden.

Gemäß einer vorteilhaften Weiterbildung der Erfindung kann vorgesehen sein, dass zumindest zwei Bearbeitungsvorrichtungen vorgesehen ist, wobei die Bearbeitungsvorrichtungen insbesondere durch eine Führungsvorrichtung bewegbar sind. Dabei können die Bearbeitungsvorrichtungen insbesondere unabhängig voneinander bewegbar ausgebildet sein. Auch kann die Führungsvorrichtung beispielsweise revolverartig, als Transportkette und/oder als Linearführung ausgebildet sein, wodurch eine platzsparende Unterbringung der Bearbeitungsvorrichtungen und eine zuverlässige Positionierung der Bearbeitungsvorrichtung an beispielsweise einem Grundkörper und/oder einer Trägerschicht und/oder an einer Druckbildschicht zur Erzeugung der Druckbildstruktur möglich ist.

Ebenfalls unter Schutz gestellt ist ein Grundkörper zur Bearbeitung durch ein erfindungsgemäßes Verfahren sowie eine Druckmaschine, insbesondere mit dem erfindungsgemäßen Druckformautomaten. Damit bringt die erfindungsgemäße Druckmaschine und der erfindungsgemäße Grundkörper die gleichen Vorteile mit sich, wie sie ausführlich mit Bezug auf ein erfindungsgemäßes Verfahren und einem erfindungsgemäßen Druckformautomaten erläutert worden sind. Dabei gelten Merkmale und Details die im Zusammenhang mit einem erfindungsgemäßen Verfahren sowie dem erfindungsgemäßen Druckformautomaten beschrieben sind, selbstverständlich auch im Zusammenhang mit dem erfindungsgemäßen Grundkörper und der erfindungsgemäßen Druckmaschine, und jeweils umgekehrt, so dass bezüglich der Offenbarung zu den einzelnen Erfindungsaspekten stets wechselseitig Bezug genommen wird, bzw. werden kann.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Figur 1: eine schematische Darstellung einer Druckmaschine mit einem Grundkörper,
- Figur 2: eine schematische Darstellung eines Grundkörpers und einer Druckbildstruktur,
- Figur 3: eine weitere schematische Darstellung eines Grundkörpers mit einer Trägerschicht,
- Figur 4a bis 4c: weitere schematische Darstellungen eines Grundkörpers,
- Figur 5: eine schematische Darstellung eines erfindungsgemäßen Druckformautomaten,
- Figuren 6a - 6c: weitere schematische Darstellungen eines erfindungsgemäßen Druckformautomaten,
- Figur 7: eine schematische Darstellung eines erfindungsgemäßen Druckformautomaten gemäß einem weiteren Ausführungsbeispiel,
- Figuren 8a - 8b: weitere schematische Darstellung eines erfindungsgemäßen Druckformautomaten gemäß einem weiteren Ausführungsbeispiel,
- Figur 9a - 9c: eine schematische Darstellung einer Führungsvorrichtung eines erfindungsgemäßen Druckformautomaten gemäß verschiedenen Ausführungsbeispielen,
- Figuren 10a - 10b: eine schematische Darstellung einer Informationsvorrichtung,
- Figur 11: eine schematische Darstellung von Teilen eines erfindungsgemäßen Druckformautomaten
- Figur 12: eine schematische Darstellung zur Visualisierung von Verfahrensschritten eines erfindungsgemäßen Verfahrens

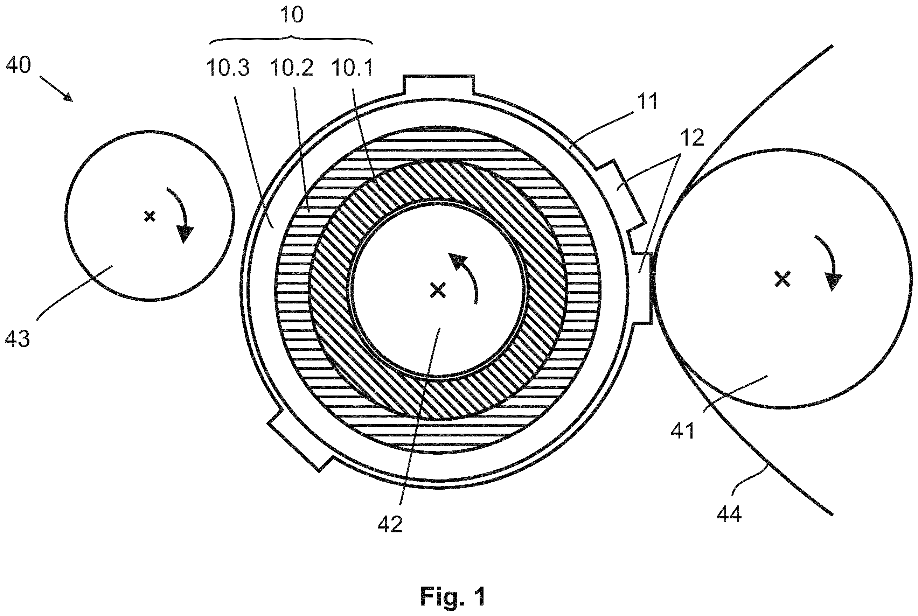

In Figur 1 ist eine Druckmaschine 40 schematisch im Querschnitt gezeigt, welche einen Gegendruckzylinder 41, einen Dorn 42 sowie eine Rasterwalze 43 umfasst. Die Druckmaschine 40 wird dabei zum Bedrucken eines Bedruckstoffs 44 eingesetzt. Zudem ist ein Grundkörper 10 gezeigt, welcher eine Hülse 10.1, eine elastische Schicht 10.2 sowie eine Trägerschicht 10.3 umfasst. Auf dem Grundkörper 10 ist eine Druckbildschicht 11 mit einer Druckbildstruktur 12 aufgebracht, wobei die Druckbildschicht 11 mit der Druckbildstruktur 12 zusammen mit dem Grundkörper 10 den Druckformzylinder der Druckmaschine 40 bildet. Der Bedruckstoff 44 verläuft dabei zwischen dem Gegendruckzylinder 41 und dem beschriebenen Druckformzylinder, so dass durch einen Anpressdruck das Druckbild auf den Bedruckstoff 44 über die Druckbildstruktur 12 übertragbar ist. Bei der gezeigten Druckmaschine 40 handelt es sich dabei insbesondere um eine Flexodruckmaschine und insbesondere um ein Hochdruckverfahren. Dennoch können die nachfolgend in den Figuren gezeigten Ausführungsbeispiele auch für ein Tiefdruckverfahren und für sonstigen Druckmaschinen eingesetzt werden.

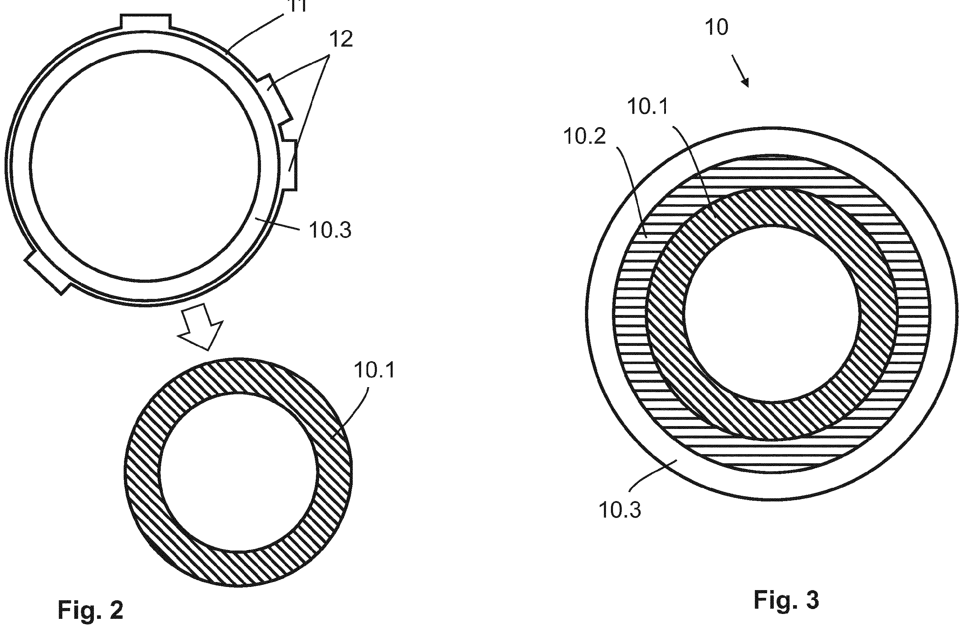

In Figur 2 ist gezeigt, dass eine Druckform (welche eine Trägerschicht 10.3 und eine Druckbildschicht 11 mit Druckbildstruktur 12 umfasst) auch separat vorliegen und manuell und/oder automatisch an eine Hülse 10.1 eines Grundkörpers 10 angebracht werden kann.

In Figur 3 ist ein Grundkörpers 10 gemäß einem weiteren Ausführungsbeispiel gezeigt, welcher eine Hülse 10.1, eine elastische Schicht 10.2 sowie eine Trägerschicht 10.3 aufweist. Die unterschiedlichen Schichten sind beispielsweise durch eine Klebemasse 10.4 miteinander verbunden. Ebenfalls ist es denkbar, dass der Grundkörper 10 ausschließlich die Hülse 10.1 und/oder ein Sleeve 10.1 umfasst, wobei die elastische Schicht 10.2 und/oder die Trägerschicht 10.3 z. B. durch einen erfindungsgemäßen Druckformautomaten 50 aufgebracht werden.

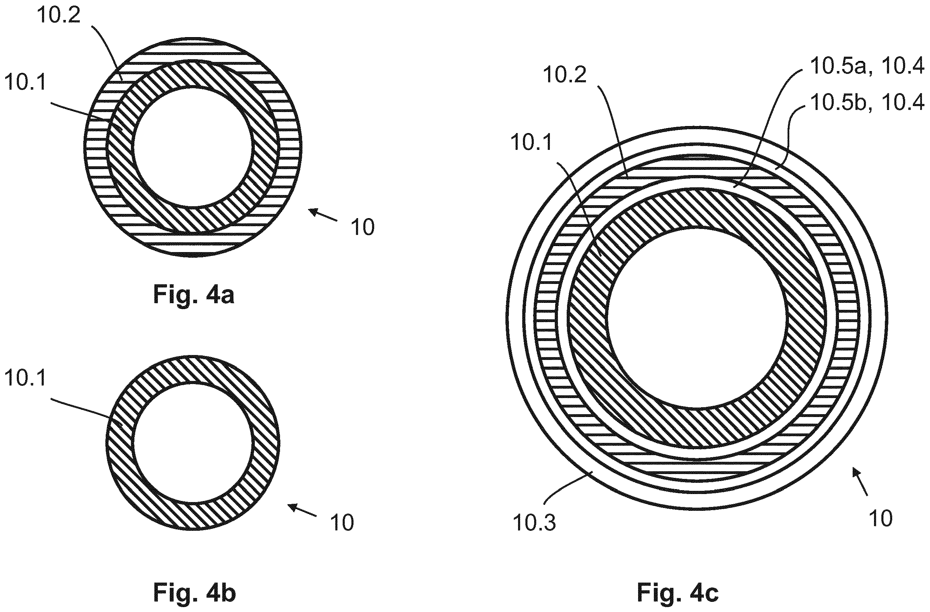

In den Figuren 4a bis 4c ist eine weitere schematische Darstellung eines Grundköpers 10 im Querschnitt gezeigt. Dabei weist ein Grundkörper 10 gemäß einem weiteren Ausführungsbeispiel in Figur 4a eine Hülse 10.1 mit einer elastischen Schicht 10.2 auf, wobei hierbei denkbar ist, dass bei der Erzeugung der Druckbildstruktur 12 die Druckbildstruktur 12 entweder direkt auf die elastische Schicht 10.2 oder zunächst z. B. durch einen erfindungsgemäßen Druckformautomaten 50 eine Trägerschicht 10.3 auf die elastische Schicht 10.2 aufgebracht wird und anschließend auf der Trägerschicht 10.3 die Druckbildstruktur 12 mit der Druckbildschicht 11 erzeugt wird. In Figur 4b ist dagegen ein weiteres Ausführungsbeispiel eines Grundkörpers 10 mit lediglich einer Hülse 10.1 gezeigt. In Figur 4c weist ein Grundkörper 10 gemäß einem weiteren Ausführungsbeispiel eine Hülse 10.1 und eine elastische Schicht 10.2 sowie eine Trägerschicht 10.3 auf, welche durch eine erste Klebeschicht 10.5a und eine zweite Klebeschicht 10.5b miteinander verbunden sind. Weiter kann alternativ zur Verbindung der elastischen Schicht 10.2 mit der Hülse 10.1 und zur Verbindung der Trägerschicht 10.3 mit der elastischen Schicht 10.2 auch eine Klebemasse 10.4 eingesetzt werden.

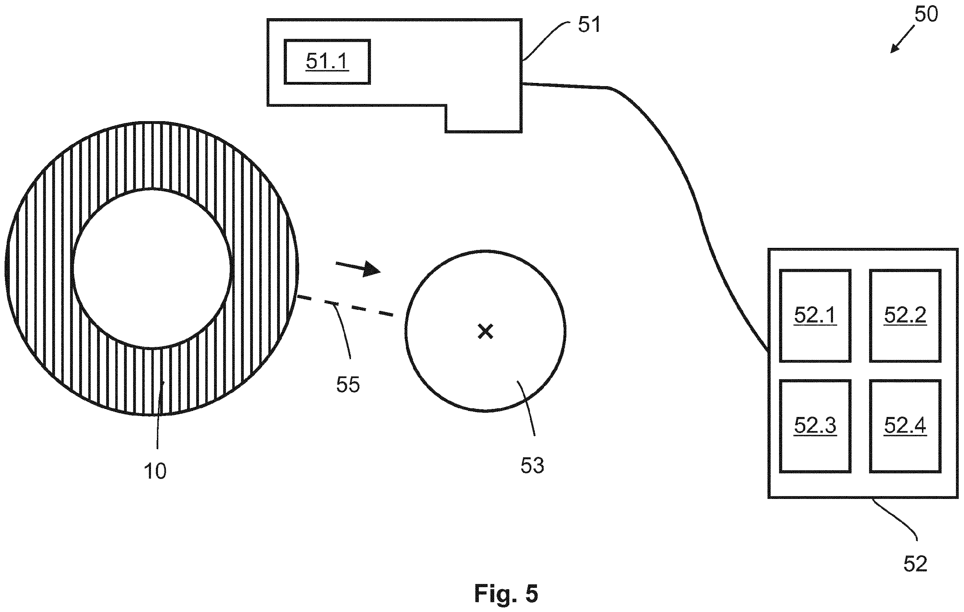

Figur 5 zeigt einen erfindungsgemäßen Druckformautomaten 50 gemäß einem ersten Ausführungsbeispiel. Damit eine Druckbildstruktur 12 gemäß einer Druckbildvorgabe 20 auf einen Grundkörper 10 erzeugt werden kann, wird zunächst der Grundkörper 10 z. B. über eine Transportvorrichtung 55 in den erfindungsgemäßen Druckformautomaten 50 eingebracht. Dabei wird der Grundkörper 10 vorzugsweise auf eine Aufnahme 53 montiert, welche beispielsweise als Dorn 42 ausgebildet sein kann. Ebenfalls ist es denkbar, dass der erfindungsgemäße Druckformautomat 50 in einer Druckmaschine 40 integriert ist, und somit zur Erzeugung der Druckbildstruktur 12 der Grundkörper 10 direkt auf einem Dorn 42 der Druckmaschine 40 von dem erfindungsgemäßen Druckformautomaten 50 bearbeitet werden kann. In diesem Fall ist die Aufnahme 53 mit dem Dorn 42 der Druckmaschine 40 identisch. Der dargestellte Grundkörper 10 ist insbesondere gemäß einem der zuvor beschriebenen Ausführungsbeispiele für Grundkörper 10 ausgebildet, so dass er beispielsweise ausschließlich eine Hülse 10.1, eine Hülse 10.1 mit einer elastischen Schicht 10.2 oder eine Hülse 10.1 mit einer elastischen Schicht 10.2 und einer Trägerschicht 10.3 aufweisen kann. Ebenfalls ist eine sonstige Ausbildung des Grundkörpers 10 denkbar oder auch beispielsweise ein Betrieb des erfindungsgemäßen Druckformautomaten 50 ohne einen Grundkörper 10 vorgesehen. Im letzteren Fall erfolgt die Erzeugung einer separaten Druckbildschicht 11 mit Druckbildstruktur 12, welche z. B. automatisiert durch den erfindungsgemäßen Druckformautomaten 50 oder manuell an einem Grundkörper 10 angebracht werden kann. Zur Steuerung des Bearbeitungsprozesses und der Erzeugung der Druckbildstruktur 12 ist weiter eine Steuervorrichtung 52 des erfindungsgemäßen Druckformautomaten 50 vorgesehen, welche eine Auswertevorrichtung 52.1, eine nicht-flüchtige Speichervorrichtung 52.2, eine Kommunikationsvorrichtung 52.3 und/oder eine Schnittstellenvorrichtung 52.4 umfasst. Die Auswertevorrichtung 52.1 ist dabei beispielsweise geeignet, um digitale Daten der nicht-flüchtigen Speichervorrichtung 52.2 auszulesen, zu verarbeiten und in Abhängigkeit von den digitalen Daten (beispielsweise von digitalen Parametern) eine Bearbeitungsvorrichtung 51 anzusteuern. Dazu ist die Auswertevorrichtung 52.1 beispielsweise als Mikrocontroller, Prozessor und/oder dergleichen ausgebildet. Die digitalen Daten können dabei z. B. durch die Kommunikationsvorrichtung 52.3 an den erfindungsgemäßen Druckformautomaten 50 übertragen und in der nicht-flüchtigen Speichervorrichtung 52.2 gespeichert werden. Weiter ist eine Schnittstellenvorrichtung 52.4 vorgesehen, wodurch z. B. digitale Daten und/oder Steuerungsbefehle von einer externen Datenverarbeitungsanlage an den erfindungsgemäßen Druckformautomaten 50 übertragen werden können. Durch die beschriebene Datenübertragung kann sowohl ein Auslesen als auch ein Empfangen von Daten möglich sein. Die Bearbeitungsvorrichtung 51 weist eine Energiequelle 51.1 auf, welche z. B. geeignet ist, eine Strahlung zur Erhitzung eines Materials 13 zur Erzeugung der Druckbildstruktur 12 zu emittieren. Weiter kann die Bearbeitungsvorrichtung 51 eine nicht gezeigte optische Vorrichtung zur Leitung und/oder Fokussierung der Strahlung umfassen. Dazu kann die optische Vorrichtung bei einem Einsatz einer Energiequelle 51.1, welche z. B. als CO2-Laser ausgebildet ist, z. B. Spiegel und bei einem Diodenlaser insbesondere Linsen umfassen. Hierdurch kann die Strahlung gezielt auf die gewünschten Positionen an dem Grundkörper 10 gerichtet werden.

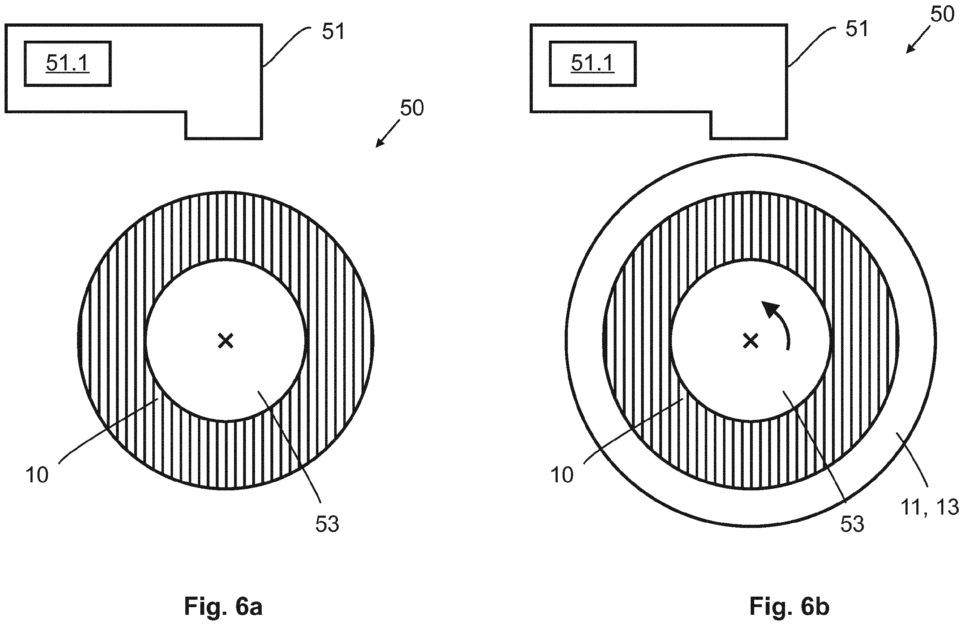

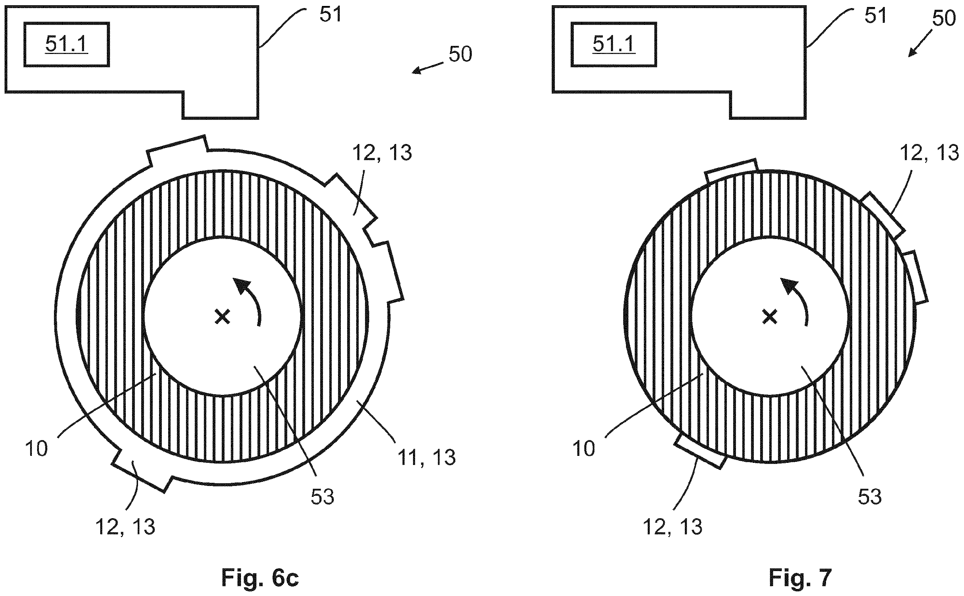

In den Figuren 6a bis 6c sind verschiedene Bearbeitungsschritte zur Erzeugung der Druckbildstruktur 12 mit einem erfindungsgemäßen Druckformautomaten 50 gezeigt. Dabei ist in Figur 6a zu sehen, dass ein Grundkörper 10 in dem erfindungsgemäßen Druckformautomaten 50 eingebracht wird, wobei in Figur 6b Material 13 durch die Bearbeitungsvorrichtung 51 zur Ausbildung einer Druckbildschicht 11 auf den Grundkörper 10 aufgetragen wird. Als nächster Schritt erfolgt in Figur 6c die Erzeugung der Druckbildstruktur 12 aus der Druckbildschicht 11, in dem durch ein subtraktives Verfahren Material 13 an bestimmten Stellen der Druckbildschicht 11 gemäß einer Druckbildvorgabe 20 entfernt werden.

In Figur 7 ist ein weiteres Ausführungsbeispiel eines erfindungsgemäßen Druckformautomaten 50 gezeigt, wobei hier ein additives Fertigungsverfahren zum Einsatz kommt. Nach der Einbringung des Grundköpers 10 in den erfindungsgemäßen Druckformautomaten 50, wie in Figur 6a gezeigt ist, erfolgt hier keine vollflächige Auftragung einer Druckbildschicht 11. Stattdessen wird hier ausschließlich an bestimmten Stellen des Grundkörpers 10 gemäß einer Druckbildvorgabe 20 Material 13 zur Erzeugung einer Druckbildschicht 11 mit Druckbildstruktur 12 aufgebracht. Weiter ist es denkbar, dass wie in Figur 6c, eine vollflächige Auftragung der Druckbildschicht 11 erfolgt, wobei anschließend darauf weiteres Material 13 zur Ausbildung von Erhebungen für die Druckbildstruktur 12 aufgebracht wird.

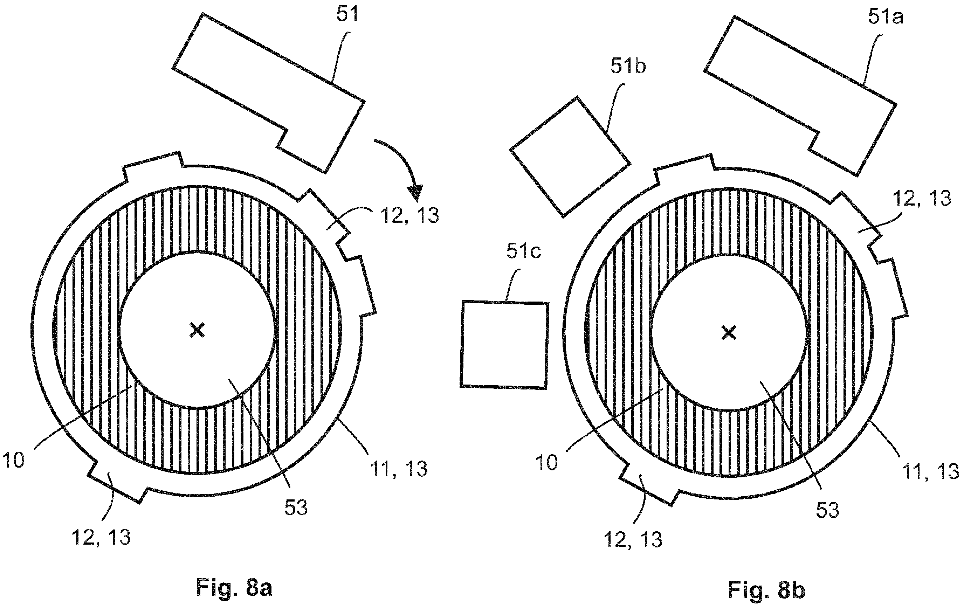

Ferner wird, wie in den Figuren 6b, 6c sowie Figur 7 durch einen Pfeil verdeutlicht, zur Steuerung der Position, an der ein Material 13 zur Erzeugung einer Druckbildstruktur 12 aufgebracht wird, der Grundkörper 10 entsprechend einer Druckbildvorgabe 20 gedreht. Alternativ kann, wie in den Figuren 8a und 8b gezeigt ist, sich auch eine Bearbeitungsvorrichtung 51 an Positionen an einem Grundkörper 10 bewegen, an denen gemäß einer Druckbildvorgabe 20 eine Erhebung entstehen soll und/oder Material 13 entfernt werden soll. Dabei können, wie in Figur 8b dargestellt ist, auch mehrere Bearbeitungsvorrichtungen 51 vorgesehen sein. Beispielhaft ist hier eine erste Bearbeitungsvorrichtung 51a, eine zweite Bearbeitungsvorrichtung 51b und eine dritte Bearbeitungsvorrichtung 51c gezeigt. Dabei kann eine erste Bearbeitungsvorrichtung 51a z. B. zur Aufbringung von Material 13 zur additiven Erzeugung der Druckbildstruktur 12 dienen, eine zweite Bearbeitungsvorrichtung 51b zur Abtragung und/oder zur Gravur der Druckbildstruktur 12 vorgesehen sein und eine dritte Bearbeitungsvorrichtung 51c eine Reinigungseinheit zur Reinigung und/oder Abtragung zeigen bzw. zur Durchführung eines Abtragungs- und/oder Reinigungsprozesses aufweisen. Auch ist es alternativ denkbar, dass die erste Bearbeitungsvorrichtung 51a zur Auftragung einer Druckbildschicht 11, einer elastischen Schicht 10.2 und/oder einer Trägerschicht 10.3 dient, eine zweite Bearbeitungsvorrichtung 51b zur Erzeugung der Druckbildstruktur 12 durch eine Auftragung von Material 13 und/oder durch eine Abtragung von Material 13 dient und eine dritte Bearbeitungsvorrichtung 51c zur Durchführung eines Abtragungs- und/oder Reinigungsprozesses dient. Auch kann die erste Bearbeitungsvorrichtung 51a eine Schichtauftragungseinheit 50.1, die zweite Bearbeitungsvorrichtung 51b eine Bearbeitungseinheit 50.2 und/oder die dritte Bearbeitungsvorrichtung 51c eine Reinigungseinheit 50.3 aufweisen. Weiter ist es denkbar, dass mit verschiedenen Bearbeitungsvorrichtungen unterschiedliche Fertigungsverfahren durchgeführt werden können.

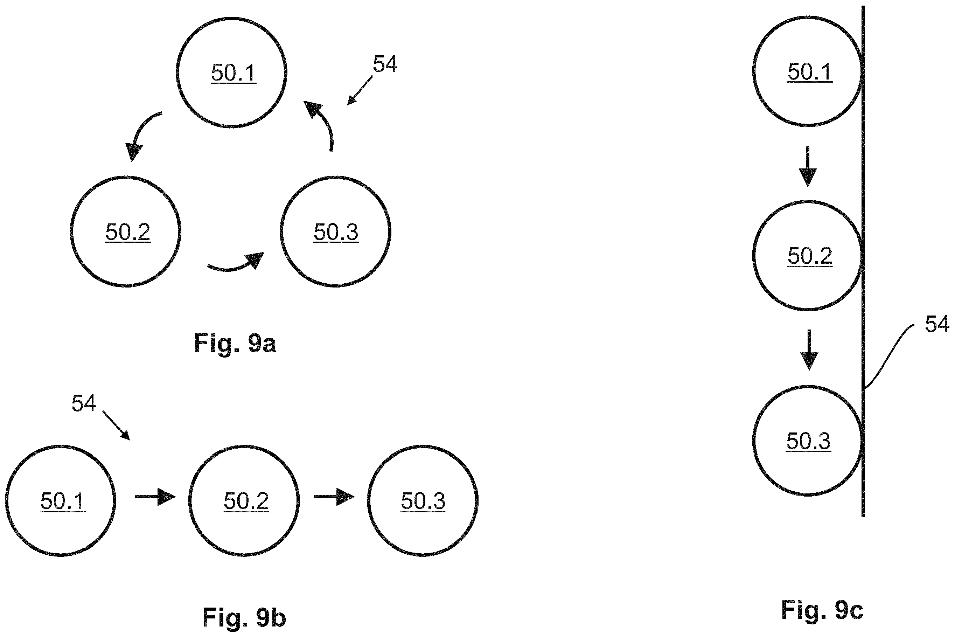

In den Figuren 9a bis 9c sind verschiedene Ausführungsbeispiele einer Führungsvorrichtung 54 eines erfindungsgemäßen Druckformautomaten 50 gezeigt. Dabei kann gemäß Figur 9a die Führungsvorrichtung 54 revolverartig ausgebildet sein, so dass verschiedene Teile des erfindungsgemäßen Druckformautomaten 50 zirkulär anordenbar und/oder bewegbar um einen Grundkörper 10 sind. Diese z. B. an einer Führungsvorrichtung 54 form- und/oder kraftschlüssig befestigten Teile, können beispielsweise Bearbeitungsvorrichtungen 51 sein oder wie dargestellt eine Schichtauftragungseinheit 50.1, eine Bearbeitungseinheit 50.2 sowie eine Reinigungseinheit 50.3. Die Schichtauftragungseinheit 50.1 dient dabei zur Auftragung von Material 13 z. B. zur Erzeugung einer Druckbildschicht 11 oder zur Ausbildung von Erhebungen für ein additives Fertigungsverfahren zur Erzeugung der Druckbildstruktur 12. Die Bearbeitungseinheit 50.2 dient z. B. der Entfernung und/oder Abtragung von Material 13 z. B. für ein subtraktives Fertigungsverfahren und/oder für eine Gravur oder zur Durchführung eines additiven Fertigungsverfahrens durch das Auftragen von Material 13 zur Erzeugung der Druckbildstruktur 12. Die Reinigungseinheit 50.3 dient insbesondere zur Durchführung eines Abtragungs- und/oder Reinigungsprozesses.

Alternativ ist wie in Figur 9b dargestellt auch eine Anordnung und Bewegung durch eine Transportkette oder wie in Figur 9c dargestellt durch eine Linearführung möglich.

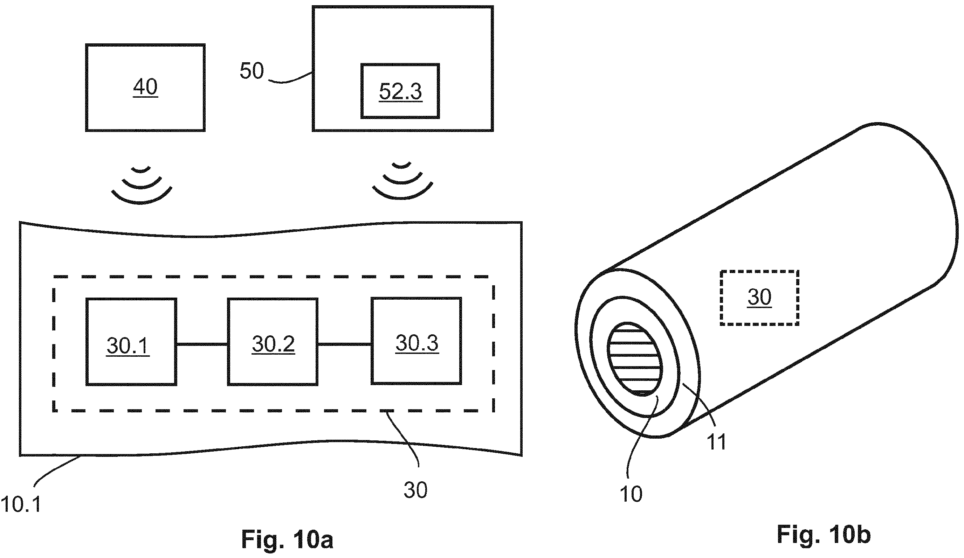

In den Figuren 10a und 10b ist eine Informationsvorrichtung 30 eines Grundkörpers 10 dargestellt, welche wie in Figur 10b gezeigt ist, im Grundkörper 10 integriert sein kann. Die Informationsvorrichtung 30 weist beispielsweise eine Kommunikationseinheit 30.1 auf, welche insbesondere als RFID-Einheit mit einem entsprechenden Transponder ausgebildet sein kann. Hierdurch ist eine Kommunikation mit einer Druckmaschine 40 und/oder mit einem erfindungsgemäßen Druckformautomaten 50 möglich, welcher dazu eine Kommunikationsvorrichtung 52.3 aufweist. Die Kommunikation erfolgt dabei beispielsweise zum Datenaustausch digitaler Daten, wie digitalen Parametern mit Vorgaben z. B. für den Herstellungsprozess zur Erzeugung einer Druckbildstruktur 12. Die digitalen Daten können dabei z. B. die Druckbildvorgabe 20 enthalten oder auch Materialeigenschaften oder Abmessungen oder Toleranzen beispielsweise des Grundkörpers 10 oder einer Druckmaschine 40. Die Daten können nach einem Empfang durch die Kommunikationseinheit 30.1 in einer nicht-flüchtigen Speichereinheit 30.2 der Informationsvorrichtung 30 gespeichert und durch eine Auswerteeinheit 30.3 ausgewertet und verarbeitet werden.

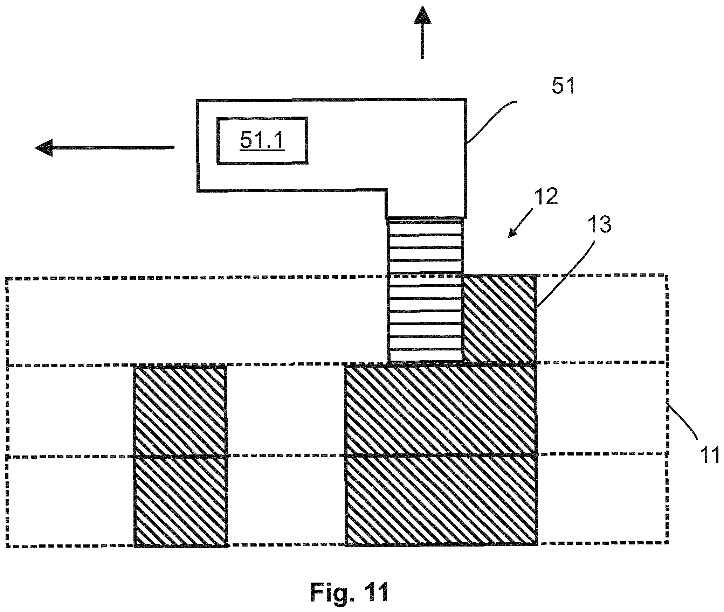

In Figur 11 ist schematisch gezeigt, wie durch eine Bearbeitungsvorrichtung 51 eines erfindungsgemäßen Druckformautomaten 50 eine Druckbildstruktur 12 in einer Druckbildschicht 11 erzeugt werden kann. Dabei wird entweder durch den von einer Energiequelle 51.1 emittierten Strahl Material 13 aufgetragen und/oder verschmolzen oder Material 13 aus der Druckbildschicht 11 abgetragen. Die Auftragung des Materials 13 z. B. gemäß einem additiven Fertigungsverfahren kann dabei auch schichtweise erfolgen, so dass die Druckbildschicht 11 mit der Druckbildstruktur 12 Schicht für Schicht ausgebildet wird. Dies ist in Figur 11 durch gestrichelte Linien dargestellt. Die möglichen Bewegungsrichtungen der Bearbeitungsvorrichtung 51 sind durch zwei Pfeile dargestellt, wobei die Bearbeitungsvorrichtung 51 z. B. durch einen Antrieb wie einem Motor in der Führungsvorrichtung 54 bewegbar ist.

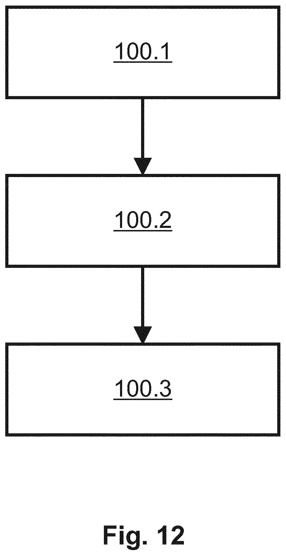

In Figur 12 ist ein erfindungsgemäßes Verfahren 100 schematisch visualisiert. Dabei erfolgt in einem ersten Verfahrensschritt 100.1 die Bereitstellung des Grundkörpers 10. Als zweiter Verfahrensschritt 100.2 erfolgt die Auftragung von Material 13 auf den Grundkörper 10 wobei in einem dritten Verfahrensschritt 100.3 das aufgetragene Material 13 z. B. gemäß einem subtraktiven und/oder einem additiven Fertigungsverfahren bearbeitet wird. Hierdurch wird die Druckbildstruktur 12 auf dem Grundkörper 10 erzeugt.

### Bezugszeichenliste

- 10: Grundkörper
- 10.1: Hülse
- 10.2: elastische Schicht
- 10.3: Trägerschicht
- 10.4: Klebemasse
- 10.5a: Erste Klebeschicht
- 10.5b: Zweite Klebeschicht

- 11: Druckbildschicht
- 12: Druckbildstruktur
- 13: Material

- 20: Druckbildvorgabe

- 30: Informationsvorrichtung
- 30.1: Kommunikationseinheit
- 30.2: nicht-flüchtige Speichereinheit
- 30.3: Auswerteeinheit

- 40: Druckmaschine
- 41: Gegendruckzylinder
- 42: Dorn
- 43: Rasterwalze
- 44: Bedruckstoff
- 50: Druckformautomat
- 50.1: Schichtauftragungseinheit
- 50.2: Bearbeitungseinheit
- 50.3: Reinigungseinheit

- 51: Bearbeitungsvorrichtung
- 51a: Erste Bearbeitungsvorrichtung
- 51b: Zweite Bearbeitungsvorrichtung
- 51c: Dritte Bearbeitungsvorrichtung
- 51.1: Energiequelle

- 52: Steuervorrichtung
- 52.1: Auswertevorrichtung
- 52.2: nicht-flüchtige Speichervorrichtung
- 52.3: Kommunikationsvorrichtung
- 52.4: Schnittstellenvorrichtung

- 53: Aufnahme
- 54: Führungsvorrichtung
- 55: Transportvorrichtung

- 100: Verfahren
- 100.1: Erster Verfahrensschritt
- 100.2: Zweiter Verfahrensschritt
- 100.3: Dritter Verfahrensschritt

## Patentansprüche

1. Verfahren (100) zur Erzeugung einer Druckbildstruktur (12) gemäß einer Druckbildvorgabe (20), insbesondere für ein Hochdruckverfahren und/oder Tiefdruckverfahren, wobei die nachfolgenden Schritte durchgeführt werden:
a) Bereitstellen eines Grundkörpers (10) für die Aufnahme der Druckbildstruktur (12),
b) Erzeugen einer Druckbildstruktur (12) auf dem Grundkörper (10), sodass eine Druckbildschicht (11) mit der Druckbildstruktur (12) auf dem Grundkörper (10) gebildet wird,
wobei die Druckbildstruktur (12) durch einen Druckformautomaten (50) additiv erzeugt wird,
**dadurch gekennzeichnet,**
**dass** eine Ansteuerung einer Bearbeitungsvorrichtung und/oder die Auswahl eines Materials (13) zur Erzeugung einer Druckbildstruktur (12) an digitale Parameter angepasst wird, wobei die Daten von dem Grundkörper (10) und/oder dem Druckformautomaten (50) an eine Druckmaschine (40) übertragen werden.

2. Verfahren (100) nach Anspruch 1,
**dadurch gekennzeichnet,**
**dass** gemäß Schritt b) zunächst ein Material (13) auf den Grundkörper (10), insbesondere als Schicht, aufgetragen und anschließend derart bearbeitet wird, dass die Druckbildstruktur (12) entsteht, und/oder dass gemäß Schritt b) die Druckbildstruktur (12) in einem Druckformautomaten (50), insbesondere durch eine Bearbeitungsvorrichtung (51) des Druckformautomaten (50), erzeugt wird.

3. Verfahren (100) nach einem der Ansprüche 1 oder 2,
**dadurch gekennzeichnet,**
**dass** gemäß Schritt a) ein Abtragungs- und/oder Reinigungsprozess durchgeführt wird, und/oder dass nach Schritt b) eine Nachbearbeitung der Druckbildstruktur (12) erfolgt, wobei insbesondere die Druckbildschicht (11) mit der Druckbildstruktur (12) durch einen Schleifvorgang nachbearbeitet wird.

4. Verfahren (100) nach einem der vorhergehenden Ansprüche,
**dadurch gekennzeichnet,**
**dass** gemäß Schritt b) eine elastische Schicht (10.2) und/oder eine Trägerschicht (10.3) auf dem Grundkörper (10) aufgebracht werden, wobei insbesondere die Druckbildstruktur (12) auf der Trägerschicht (10.3) erzeugt wird.

5. Verfahren (100) nach einem der vorhergehenden Ansprüche,
**dadurch gekennzeichnet,**
**dass** die Druckbildstruktur (12) insbesondere auf einer Trägerschicht (10.3) derart erzeugt wird, dass die Druckbildstruktur (12) als eine separate Druckbildschicht (11) ausgebildet und auf einen Grundkörper (10) aufbringbar ist.

6. Verfahren (100) nach einem der vorhergehenden Ansprüche,
**dadurch gekennzeichnet,**
**dass** eine elastische Schicht (10.2) und/oder eine Trägerschicht (10.3) durch den Druckformautomaten (50) erzeugt werden, und die elastische Schicht (10.2) und/oder die Trägerschicht (10.3) mit der Druckbildschicht (11) auf einen Grundkörper (10) aufgebracht werden.

7. Verfahren (100) nach einem der vorhergehenden Ansprüche,
**dadurch gekennzeichnet,**
**dass** die Druckbildstruktur (12) durch ein Fertigungsverfahren, insbesondere ein additives und/oder ein 3D-Druckverfahren aus einem Material (13) erzeugt wird.

8. Verfahren (100) nach einem der vorhergehenden Ansprüche,
**dadurch gekennzeichnet,**
**dass** die Druckbildstruktur (12) in einem ersten Schritt durch eine Vorbearbeitung, insbesondere durch ein additives Fertigungsverfahren, und in einem anschließenden zweiten Schritt durch eine Feinbearbeitung erzeugt wird.

9. Verfahren (100) nach einem der vorhergehenden Ansprüche,
**dadurch gekennzeichnet,**
**dass** zur Erzeugung der Druckbildstruktur (12), insbesondere bei einer Vorbearbeitung, zunächst ein Material (13) aufgebracht und anschließend, insbesondere durch UV-Licht und/oder Elektronenstrahlhärten, ausgehärtet wird.

10. Verfahren (100) nach einem der vorhergehenden Ansprüche,
**dadurch gekennzeichnet,**
**dass** die Druckbildstruktur (12) direkt in einer Druckmaschine (40) auf einem Grundkörper (10) erzeugt wird, wobei insbesondere der Grundkörper (10) an einem Dorn (42) der Druckmaschine (40) montiert ist.

11. Verfahren (100) nach einem der vorhergehenden Ansprüche,
**dadurch gekennzeichnet,**
**dass** ein Material (13) zur Erzeugung der Druckbildstruktur (12) durch ein Auftragsverfahren aufgebracht wird, und/oder dass die Druckbildstruktur (12) aus einem Material (13), insbesondere aus einem Mehrkomponenten-Erzeugnis, einem Polymer, Maisstärke, Heißkleber, einem Elastomer, EPDM, Kautschuk und/oder Pulver ausgebildet ist.

12. Verfahren (100) nach einem der vorhergehenden Ansprüche,
**dadurch gekennzeichnet,**
**dass** eine Ansteuerung einer Bearbeitungsvorrichtung (51) und/oder die Auswahl eines Materials (13) zur Erzeugung der Druckbildstruktur (12) an digitale Parametern angepasst wird, wobei insbesondere die digitalen Parameter von dem Grundkörper (10) kontaktlos übertragen werden.

13. Verfahren (100) nach einem der vorhergehenden Ansprüche,
**dadurch gekennzeichnet,**
**dass** die Trägerschicht (10.3) als eine harte Schicht aus einem Kunststoff, insbesondere aus Polyester, Polyurethan und/oder PET, ausgebildet ist.

14. Verfahren (100) nach einem der vorhergehenden Ansprüche,
**dadurch gekennzeichnet,**
**dass** die elastische Schicht (10.2) einen Schaumstoff, insbesondere Polyurethan, Polypropylen, Polyethylen, Polystyrol, PET und/oder Biopolymere, aufweist, und/oder dass die elastische Schicht (10.2) als einseitig oder beidseitig klebendes Klebeband ausgebildet ist und/oder eine einseitige oder beidseitige Haftklebemasse (10.4) aufweist.

15. Verfahren (100) nach einem der vorhergehenden Ansprüche,
**dadurch gekennzeichnet,**
**dass** die elastische Schicht (10.2) eine Dicke von 0,1 mm bis 2 mm, insbesondere von 0,5 mm bis 1 mm hat und/oder die Trägerschicht (10.3) eine Dicke von 100 µm bis 1000 µm, insbesondere von im Wesentlichen 300 µm hat und/oder die Druckbildschicht (11) mit der Druckbildstruktur (12) eine Dicke von 0,1 mm bis 10 mm, insbesondere von im Wesentlichen 0,5 mm bis 1 mm hat.

16. Druckformautomat (50), der insbesondere gemäß einem Verfahren (100) nach einem der Ansprüche 1 bis 15 betreibbar ist, zur Erzeugung einer Druckbildstruktur (12) gemäß einer Druckbildvorgabe (20), insbesondere für ein Hochdruckverfahren und/oder Tiefdruckverfahren, mit
einer Bearbeitungsvorrichtung (51) zur Erzeugung der Druckbildstruktur (12) durch eine Bearbeitung eines Materials (13), und
einer Steuervorrichtung (52) zur Steuerung der Bearbeitungsvorrichtung (51), wobei die Bearbeitungsvorrichtung (51) derart ausgebildet ist, dass die Druckbildstruktur (12) aus dem Material (13) gemäß einer Druckbildvorgabe (20) erzeugbar ist,
wobei der Druckformautomat (50) eine Bearbeitungsvorrichtung (51) für ein additives Fertigungsverfahren aufweist und derart gebildet ist, dass eine Ansteuerung der Bearbeitungsvorrichtung (51) an digitale Parameter anpassbar ist, wobei die Daten von der Bearbeitungsvorrichtung (51) an eine Druckmaschine (40) übertragbar sind.

17. Druckformautomat (50) nach Anspruch 16,
**dadurch gekennzeichnet,**
**dass** eine nicht-flüchtige Speichervorrichtung (52.2) vorgesehen ist, welche die Druckbildvorgabe (20) und insbesondere digitale Parameter für die Erzeugung der Druckbildstruktur (12) auf einen Grundkörper (10) umfasst.

18. Druckformautomat (50) nach Anspruch 16 oder 17,
**dadurch gekennzeichnet,**
**dass** die Bearbeitungsvorrichtung (51) eine Energiequelle (51.1), insbesondere eine Laserquelle, aufweist, wodurch ein Fertigungsverfahren, insbesondere ein 3D-Druckverfahren durchführbar ist.

19. Druckformautomat (50) nach einem der Ansprüche 16 bis 18,
**dadurch gekennzeichnet,**
**dass** eine erste Bearbeitungsvorrichtung (51a) zur Vorbearbeitung des Materials (13) und eine zweite Bearbeitungsvorrichtung (51b) zur Feinbearbeitung des Materials (13) vorgesehen ist.

20. Druckformautomat (50) nach einem der Ansprüche 16 bis 19,
**dadurch gekennzeichnet,**
**dass** die Bearbeitungsvorrichtung (51) derart durch die Steuervorrichtung (52) ansteuerbar ist, dass die Druckbildstruktur (12) auf Teilbereiche auf dem Grundkörper (10) erzeugbar ist, wobei die Teilbereiche durch eine Auswertevorrichtung (52.1) gemäß der Druckbildvorgabe (20) bestimmbar sind, und/oder dass durch die Steuervorrichtung (52) das Material (13) zur Erzeugung der Druckbildstruktur (12) in Abhängigkeit von einem vorgegebenen Parameter auswählbar und auftragbar ist.

21. Druckformautomat (50) nach einem der Ansprüche 16 bis 20,
**dadurch gekennzeichnet,**
**dass** der Druckformautomat (50) eine Transportvorrichtung (55) zur Bewegung des Grundkörpers (10) und/oder der Druckbildstruktur (11) aufweist.

22. Druckformautomat (50) nach einem der Ansprüche 16 bis 21,
**dadurch gekennzeichnet,**
**dass** der Druckformautomat (50) eine Führungsvorrichtung (54), insbesondere eine Linearführung, aufweist, wobei insbesondere die Bearbeitungsvorrichtung (51) an der Führungsvorrichtung (54) beweglich angeordnet ist.

23. Druckformautomat (50) nach einem der Ansprüche 16 bis 22,
**dadurch gekennzeichnet,**
**dass** zumindest zwei Bearbeitungsvorrichtungen (51) vorgesehen ist, wobei die Bearbeitungsvorrichtungen (51) insbesondere durch eine Führungsvorrichtung (54) bewegbar sind.

## Claims

1. A method (100) for producing a printed image structure (12) according to a printed image specification (20), in particular for a letterpress process and/or intaglio printing process, wherein the following steps are carried out:
a) providing a base body (10) for receiving the printed image structure (12),
b) producing a printed image structure (12) on the base body (10) so that a printed image layer (11) is formed with the printed image structure (12) on the base body (10),
wherein the printed image structure (12) is produced by an automatic printing form machine (50) in an additive manner,
**characterized in**
**that** a control of a processing device and/or the selection of a material (13) for the production of a printed image structure (12) is adapted to digital parameters, wherein the data are transferred from the base body (10) and/or from the automatic printing form machine (50) to the printing machine (40).

2. The method (100) according to claim 1,
**characterized in**
**that** according to step b) first a material (13) is applied to the base body (10), in particular as a layer and then it is processed in such a manner that the printed image structure (12) arises, and/or that according to step b) the printed image structure (12) is produced in an automatic printing form machine (50), in particular, by means of a processing device (51) of the automatic printing form machine (50).

3. The method (100) according to any one of claims 1 or 2,
**characterized in**
**that** according to step a) a removal- and/or cleaning process is carried out, and/or that after step b) a post-processing of the printed image structure (12) takes place, wherein in particular, the printed image layer (11) is post-processed with the printed image structure (12) by a grinding process.

4. The method (100) according to any one of the preceding claims,
**characterized in**
**that** according to step b) an elastic layer (10.2) and/or a carrier layer (10.3) is applied to the base body (10), wherein, in particular, the printed image structure (12) is produced on the carrier layer (10.3).

5. The method (100) according to any one of the preceding claims,
**characterized in**
**that** the printed image structure (12) is produced, in particular, on a carrier layer (10.3) in such a manner that the printed image structure (12) is designed as a separate printed image layer (11) and can be applied to a base body (10).

6. The method (100) according to any one of the preceding claims,
**characterized in**
**that** an elastic layer (10.2) and/or a carrier layer (10.3) are produced by the automatic printing form machine (50), and the elastic layer (10.2) and/or the carrier layer (10.3) are applied with the printed image layer (11) to a base body (10).

7. The method (100) according to any one of the preceding claims,
**characterized in**
**that** the printed image structure (12) is produced by a production method, in particular, an additive and/or a 3D printing method from of a material (13).

8. The method (100) according to any one of the preceding claims,
**characterized in**
**that** the printed image structure (12) is produced in a first step by a pre-processing, in particular, by an additive production process, and in a subsequent second step by a fine processing.

9. The method (100) according to any one of the preceding claims,
**characterized in**
**that** in order to produce the printed image layer (12), in particular, during the pre-processing, first a material (13) is applied and is subsequently hardened, in particular, by UV light and/or electron beam hardening.

10. The method (100) according to any one of the preceding claims,
**characterized in**
**that** the printed image structure (12) is produced directly in a printing machine (40) on a base body (10), wherein, in particular, the base body (10) is mounted on a mandrel (42) of the printing machine (40).

11. The method (100) according to any one of the preceding claims,
**characterized in**
**that** a material (13) for producing the printed image structure (12) is applied by an application method and/or that the printed image structure (12) is formed from a material (13), in particular, from a multi-component product, a polymer, corn starch, hot adhesive, an elastomer, EPDM, rubber and/or powder.

12. The method (100) according to any one of the preceding claims,
**characterized in**
**that** a control of a processing device (51) and/or the selection of a material (13) for producing the printed image structure (12) is adapted to digital parameters, wherein, in particular, the digital parameters are transmitted from the base body (10) in a contactless manner.

13. The method (100) according to any one of the preceding claims,
**characterized in**
**that** the carrier layer (10.3) is designed as a hard layer made from a plastic, in particular, from polyester, polyurethane and/or PET.

14. The method (100) according to any one of the preceding claims,
**characterized in**
**that** the elastic layer (10.2) has a foam, in particular, polyurethane, polypropylene, polyethylene, polystyrene, PET and/or biopolymers, and/or that the elastic layer (10.2) is designed as an adhesive tape, which is adhesive on one-side or both sides and/or has a pressure-sensitive adhesive (10.4) on one side or both sides.

15. The method (100) according to any one of the preceding claims,
**characterized in**
**that** the elastic layer (10.2) has a thickness of 0.1 mm to 2 mm, in particular, of 0.5 mm to 1 mm and/or the carrier layer (10.3) has a thickness of 100 µm to 1000 µm, in particular, of substantially 300 µm and/or the printed image layer (11) with the printed image structure (12) has a thickness of 0.1 mm to 10 mm, in particular, of substantially 0.5 mm to 1 mm.

16. An automatic printing form machine (50), which can be operated, in particular, according to a method (100) according to any one of claims 1 to 15, for producing a printed image structure (12) according to a printed image specification (20), in particular for a letterpress process and/or intaglio printing process, having a processing device (51) for producing the printed image structure (12) by a processing of a material (13), and having a control device (52) for controlling the processing device (51), wherein the processing device (51) is designed in such a manner, that the printed image structure (12) can be produced from the material (13) according to a printed image specification (20),
wherein the automatic printing form machine (50) has a processing device (51) for an additive production process and is formed in such a manner that a control of the processing device (51) can be adapted to digital parameters, wherein the data can be transmitted from the processing device (51) to a printing machine (40).

17. The automatic printing form machine (50) according to claim 16,
**characterized in**
**that** a non-volatile memory device (52.2) is provided, which comprises the printed image specification (20) and, in particular, digital parameters for the production of the printed image structure (12) on a base body (10).

18. The automatic printing form machine (50) according to claim 16 or 17,
**characterized in**
**that** the processing device (51) has an energy source (51.1), in particular, a laser source, whereby a production process, in particular, a 3D printing process can be implemented.

19. The automatic printing form machine (50) according to any one of claims 16 to 18,
**characterized in**
**that** a first processing device (51a) is provided for the pre-processing of the material (13) and a second processing device (51b) is provided for the fine processing of the material (13).

20. The automatic printing form machine (50) according to any one of claims 16 to 19,
**characterized in**
**that** the processing device (51) can be controlled by the control device (52) in such a manner that the printed image structure (12) can be produced on partial regions on the base body (10), wherein the partial regions can be determined by an evaluation device (52.1) according to the printed image specification (20), and/or that the material (13) for producing the printed image structure (12) can be selected and applied by the control device (52) as a function of a predetermined parameter.

21. The automatic printing form machine (50) according to any one of claims 16 to 20,
**characterized in**
**that** the automatic printing form machine (50) has a transport device (55) for moving the base body (10) and/or the printed image structure (11).

22. The automatic printing form machine (50) according to any one of claims 16 to 21,
**characterized in**
**that** the automatic printing form machine (50) has a guide device (54), in particular, a linear guide, wherein, in particular, the processing device (51) can be movably arranged on the guide device (54).

23. The automatic printing form machine (50) according to any one of claims 16 to 22,
**characterized in**
**that** at least two processing devices (51) are provided, wherein the processing devices (51) can be moved, in particular, by a guide device (54).

## Revendications

1. Procédé (100) pour la réalisation d'une structure d'image imprimée (12) selon une directive d'image imprimée (20), plus particulièrement pour un procédé à haute pression et/ou un procédé d'héliogravure, les étapes suivantes étant exécutées :
a) mise à disposition d'un corps de base (10) pour le logement de la structure d'image imprimée (12),
b) réalisation d'une structure d'image imprimée (12) sur le corps de base (10) de façon à former une couche d'image imprimée (11) avec la structure d'image imprimée (12) sur le corps de base (10),
dans lequel la structure d'image imprimée (12) est réalisée de manière additive par un automate de formage sous pression (50),
**caractérisé en ce que**
un contrôle d'un dispositif d'usinage et/ou la sélection d'un matériau (13) pour la réalisation d'une structure d'image imprimée (12) est adaptée à des paramètres numériques, dans lequel les données sont transférées du corps de base (10) et/ou de l'automate de formage sous pression (50) à une machine d'impression (40).

2. Procédé (100) selon la revendication 1,
**caractérisé en ce que**
selon l'étape b), un matériau (13) est d'abord appliqué sur le corps de base (10), plus particulièrement sous la forme d'une couche, puis est usiné de façon à ce que la structure d'image imprimée (12) et/ou **en ce que** selon l'étape b), la structure d'image imprimée (12) est réalisée dans un automate de formage sous pression (50), plus particulièrement par un dispositif d'usinage (51) de l'automate de formage sous pression (50).

3. Procédé (100) selon l'une des revendications 1 ou 2,
**caractérisé en ce que**
selon l'étape a), un processus d'enlèvement et/ou de nettoyage est exécuté et/ou **en ce que**, après l'étape b), a lieu une retouche de la structure d'image imprimée (12), dans lequel plus particulièrement la couche d'image imprimée (11) avec la structure d'image imprimée (12) est retouchée à l'aide d'un processus de meulage.

4. Procédé (100) selon l'une des revendications précédentes,
**caractérisé en ce que**
selon l'étape b), une couche élastique (10.2) et/ou une couche de support (10.3) sont appliquées sur le corps de base (10), dans lequel plus particulièrement la structure d'image imprimée (12) est réalisée sur la couche de support (10.3).

5. Procédé (100) selon l'une des revendications précédentes,
**caractérisé en ce que**
la structure d'image imprimée (12) est réalisée plus particulièrement sur une couche de support (10.3) de façon à ce que la structure d'image imprimée (12) soit réalisée sous la forme d'une couche d'image imprimée séparée (11) et puisse être appliquée sur un corps de base (10).

6. Procédé (100) selon l'une des revendications précédentes,
**caractérisé en ce que**
une couche élastique (10.2) et/ou une couche de support (10.3) sont réalisées par l'automate de formage sous pression (50) et la couche élastique (10.2) et/ou la couche de support (10.3) avec la couche d'image imprimée (11) sont appliquées sur un corps de base (10).

7. Procédé (100) selon l'une des revendications précédentes,
**caractérisé en ce que**
la structure d'image imprimée (12) est réalisée à l'aide d'un procédé de fabrication, plus particulièrement un procédé d'impression additif et/ou 3D à partir d'un matériau (13).

8. Procédé (100) selon l'une des revendications précédentes,
**caractérisé en ce que**
la structure d'image imprimée (12) est réalisée, dans une première étape, par un pré-usinage, plus particulièrement à l'aide d'un procédé de fabrication additif et, dans une deuxième étape, à l'aide d'un usinage fin.

9. Procédé (100) selon l'une des revendications précédentes,
**caractérisé en ce que**
pour la réalisation de la structure d'image imprimée (12), plus particulièrement lors d'un pré-usinage, un matériau (13) est d'abord appliqué puis est durci, plus particulièrement par une lumière UV et/ou par durcissement par faisceaux d'électrons.

10. Procédé (100) selon l'une des revendications précédentes,
**caractérisé en ce que**
la structure d'image imprimée (12) est réalisée directement dans une machine d'impression (40) sur un corps de base (10), dans lequel plus particulièrement le corps de base (10) est monté sur un mandrin (42) de la machine d'impression (40).

11. Procédé (100) selon l'une des revendications précédentes,
**caractérisé en ce que**
un matériau (13) pour la réalisation de la structure d'image imprimée (12) est appliqué à l'aide d'un procédé d'application et/ou **en ce que** le structure d'image imprimée (12) est constituée d'un matériau (13), plus particulièrement d'un produit multi-composant, d'un polymère, d'amidon de maïs, de colle à chaud, d'un élastomère, d'EPDM, de caoutchouc et/ou d'une poudre.

12. Procédé (100) selon l'une des revendications précédentes,
**caractérisé en ce que**
un contrôle d'un dispositif d'usinage (51) et/ou la sélection d'un matériau (13) pour la réalisation de la structure d'image imprimée (12) est adaptée à des paramètres numériques, dans lequel plus particulièrement les paramètres numériques sont transférés sans contact à partir du corps de base (10).

13. Procédé (100) selon l'une des revendications précédentes,
**caractérisé en ce que**
la couche de support (10.3) est réalisée sous la forme d'une couche dure à partir d'une matière plastique, plus particulièrement de polyester, de polyuréthane et/ou de PET.

14. Procédé (100) selon l'une des revendications précédentes,
**caractérisé en ce que**
la couche élastique (10.2) comprend une matière alvéolaire, plus particulièrement du polyuréthane, du polypropylène, du polyéthylène, du polystyrène, du PET et/ou des bio-polymères et/ou **en ce que** la couche élastique (10.2) est conçue comme une bande adhésive simple face ou double face et/ou comprend une masse auto-adhésive simple face ou double face (10.4).

15. Procédé (100) selon l'une des revendications précédentes,
**caractérisé en ce que**
la couche élastique (10.2) présente une épaisseur de 0,1 mm à 2 mm, plus particulièrement de 0,5 mm à 1 mm et/ou la couche de support (10.3) présente une épaisseur de 100 µm à 1 000 µm, plus particulièrement de 300 µm globalement et/ou la couche d'image imprimée (11) avec la structure d'image imprimée (12) présente une épaisseur de 0,1 mm à 10 mm, plus particulièrement de 0,5 mm à 1 mm globalement.

16. Automate de formage sous pression (50) qui peut être utilisé plus particulièrement selon un procédé (100) selon l'une des revendications 1 à 15, pour la réalisation d'une structure d'image imprimée (12) selon la directive d'image imprimée (20), plus particulièrement pour un procédé à haute pression et/ou un procédé d'héliogravure avec
un dispositif d'usinage (51) pour la réalisation de la structure d'image imprimée (12) à l'aide d'un usinage d'un matériau (13) et
un dispositif de commande (52) pour le contrôle du dispositif d'usinage (51), dans lequel le dispositif d'usinage (51) est conçu de façon à ce que la structure d'image imprimée (12) peut être réalisée à partir du matériau (13) selon une directive d'image imprimée (20),
dans lequel l'automate de formage sous pression (50) comprend un dispositif d'usinage (51) pour un procédé de fabrication additif et est conçu de façon à ce qu'un contrôle du dispositif d'usinage (51) puisse être adapté à des paramètres numériques, dans lequel les données peuvent être transférées du dispositif d'usinage (51) vers une machine d'impression (40).

17. Automate de formage sous pression (50) selon la revendication 16,
**caractérisé en ce que**
un dispositif de mémoire non volatile (52.2) est prévu, qui comprend la directive d'image imprimée (20) et plus particulièrement des paramètres numériques pour la réalisation de la structure d'image imprimée (12) sur un corps de base (10).

18. Automate de formage sous pression (50) selon la revendication 16 ou 17,
**caractérisé en ce que**
le dispositif d'usinage (51) comprend une source d'énergie (51.1), plus particulièrement une source laser, ce qui permet d'exécuter un procédé de fabrication, plus particulièrement un procédé d'impression 3D.

19. Automate de formage sous pression (50) selon l'une des revendications 16 à 18,
**caractérisé en ce que**
un premier dispositif d'usinage (51a) est prévu pour le pré-usinage du matériau (13) et un deuxième dispositif d'usinage (51b) est prévu pour l'usinage fin du matériau (13).

20. Automate de formage sous pression (50) selon l'une des revendications 16 à 19,
**caractérisé en ce que**
le dispositif d'usinage (51) peut être contrôlé par le dispositif de commande (52) de façon à ce que la structure d'image imprimée (12) peut être réalisée sur des zones partielles sur le corps de base (10), dans lequel les zones partielles peuvent être définies par un dispositif d'analyse (52.1) selon la directive d'image imprimée (20), et/ou **en ce que** le dispositif de commande (52) permet de sélectionner et d'appliquer le matériau (13) pour la réalisation de la structure d'image imprimée (12) en fonction d'un paramètre prédéterminé.

21. Automate de formage sous pression (50) selon l'une des revendications 16 à 20,
**caractérisé en ce que**
l'automate de formage sous pression (50) comprend un dispositif de transport (55) pour le déplacement du corps de base (10) et/ou de la structure d'image imprimée (11).

22. Automate de formage sous pression (50) selon l'une des revendications 16 à 21,
**caractérisé en ce que**
l'automate de formage sous pression (50) comprend un dispositif de guidage (54), plus particulièrement un guidage linéaire, dans lequel plus particulièrement le dispositif d'usinage (51) est disposé de manière mobile sur le dispositif de guidage (54).

23. Automate de formage sous pression (50) selon l'une des revendications 16 à 22,
**caractérisé en ce que**
au moins deux dispositifs d'usinage (51) sont prévus, dans lequel les dispositifs d'usinage (51) peuvent être déplacés plus particulièrement à l'aide d'un dispositif de guidage (54).
